(19) Europäisches Patentamt
European Patent Office
Office européen des brevets

(11) **EP 2 293 122 A2**

(12) **EUROPEAN PATENT APPLICATION**

(43) Date of publication:
**09.03.2011 Bulletin 2011/10**

(51) Int Cl.:
***G02B 5/30*** *(2006.01)* ***C09B 69/10*** *(2006.01)*

(21) Application number: **10174114.8**

(22) Date of filing: **26.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **28.08.2009 JP 2009199091**

(71) Applicant: **Fujifilm Corporation**
**Minato-ku**
**Tokyo 106-0031 (JP)**

(72) Inventors:
- **Tasaka, Tomoki**
  **Kanagawa 258-8577 (JP)**
- **Morishima, Shinichi**
  **Kanagawa 250-0193 (JP)**
- **Ichihashi, Mitsuyoshi**
  **Kanagawa 250-0193 (JP)**
- **Goto, Ryoji**
  **Kanagawa 250-0193 (JP)**

(74) Representative: **HOFFMANN EITLE**
**Patent- und Rechtsanwälte**
**Arabellastraße 4**
**81925 München (DE)**

(54) **Polarizing film, laminate, and liquid crystal display device**

(57) A polarizing film, satisfying $DI'/P' \leq 4.3\times10^{-4}$ which expresses relation between degree of polarization P', and depolarization index DI' calculated by the equation below is disclosed. X represents a value calculated by the equation below, provided that a polarizing plate having degree of polarization of P, the polarizing film, and a polarizing plate having degree of polarization P, having azimuths of transmission axes of a°, b° and c°, respectively, are stacked in this order as viewed from a flight source, to give brightness written as [a/b/c].

$$DI' = \frac{1+2PP'+P^2+X\left(P^2-1\right)}{P^2\left(1+X\right)}$$

$$X = \frac{[0/0/0]}{[0/90/90]}$$

FIG.1

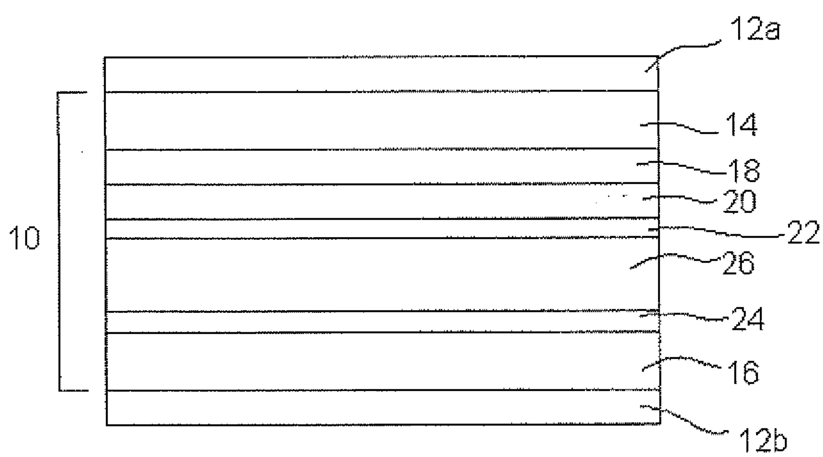


EP 2 293 122 A2

## Description

BACKGROUND OF THE INVENTION

TECHNICAL FIELD

The present invention relates to a polarizing film useful as so-called, in-cell polarizer; and a laminate and a liquid crystal display device using the polarizing film.

BACKGROUND ART

There has conventionally been a problem in that a color filter incorporated in a liquid crystal display device induces depolarization, to thereby increase the amount of transmitted light in the black state. One method having been proposed in order to solve the problem is such as providing a polarizing layer (so-called, in-cell polarizer, and also referred to as "internal polarizing layer", hereinafter) between a color filter and a liquid crystal material layer (Japanese Laid-Open Patent Publication No. 2008-90317). According to the method, the depolarization by the color filter may be suppressed, scattered light ascribable to the depolarization by the color filter may consequently be suppressed, and thereby leakage of light in the black state may be moderated.

SUMMARY OF THE INVENTION

However, investigations by the present inventors revealed that, in some cases, the polarizing layer may conversely enhance the depolarization, and may increase the amount of transmitted light in the dark state against expectation, depending on optical characteristics of so-called internal polarizing layer disposed in the liquid crystal cell. It was also found that, depending on optical characteristics of the internal polarizing layer, the amount of transmitted light in the bright state may decrease to a considerable degree, enough to ruin the practicability. As described in the above, the liquid crystal display device may not always be ensured to give an excellent contrast, only simply by disposing the polarizing layer in the liquid crystal cell.
One object of the present invention is to provide a polarizing film useful as the internal polarizing layer; and a laminate and a liquid crystal display device using the polarizing film.
Another object of the present invention is to provide a polarizing film, contributive to moderate depolarization possibly induced by various components, such as color filter, disposed in the liquid crystal cell.
Still another object of the present invention is to improve the liquid crystal display device having the internal polarizing layer.
Still another object of the present invention is to provide a liquid crystal display device, successfully moderated in depolarization possibly induced by various components, such as a color filter, disposed in the liquid crystal cell, by providing an internal polarizing layer.
Still another object of the present invention is to provide a liquid crystal display device, not only successfully suppressed in leakage of light in the black state, but also improved in brightness in the white state.
The means for achieving the above objects are as follows.

[1] A polarizing film, satisfying $DI'/P' \leq 4.3\times10^{-4}$ which expresses relation between degree of polarization P', and depolarization index DI' calculated by the equation below:

$$DI' = \frac{1 + 2PP' + P^2 + X\left(P^2 - 1\right)}{P^2\left(1 + X\right)}$$

where, X represents a value calculated by the equation below, provided that a polarizing plate having degree of polarization of P, the polarizing film, and a polarizing plate having degree of polarization P, having azimuths of transmission axes of a˚, b˚ and c˚, respectively, are stacked in this order as viewed from a light source, to give brightness written as [a/b/c]:

$$X = \frac{[0/0/0]}{[0/90/90]}$$

[2] The polarizing film of [1], having a transmittance value of 30% or larger.

[3] The polarizing film of [1] or [2], wherein the degree of polarization P' and the depolarization index DI' satisfy $DI'/P' \leq 2.5 \times 10^{-4}$.

[4] The polarizing film of any one of [1] to [3], wherein the degree of polarization P' is 0.4 to 1.0.

[5] The polarizing film of any one of [1] to [4], formed of a composition comprising one or more species of liquid-crystalline azo dye.

[6] The polarizing film of [5], wherein the composition comprises at leas one colorant compound in the amount of equal to or more than 30 % with respect to the total amount of a liquid-crystalline material contained in the composition.

[7] The polarizing film of [5] or [6], wherein the one or more species of liquid-crystalline azo dye is a nematic liquid-crystalline azo dye represented by formula (I):

(I)

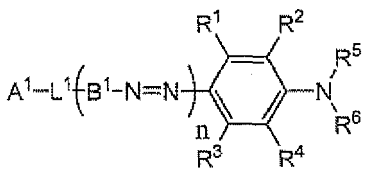

where $R^1$ to $R^4$ respectively represent a hydrogen atom or a substituent; $R^5$ and $R^6$ respectively represent a hydrogen atom or an optionally-substituted alkyl; $L^1$ represents -N=N-, -N=CH-, -C(=O)O- or -OC(=O)-; $A^1$represents an optionally-substituted phenyl, an optionally-substituted naphthyl, an optionally-substituted aromatic heterocyclic group; $B^1$ represents an optionally-substituted divalent aromatic hydrocarbon group or an optionally-substituted divalent aromatic heterocyclic group; n is an integer from 1 to 4, and $B^1$ may be same or different when n is equal to or more than 2.

[8] The polarizing film of any one of [5] to [7], formed by coating the composition.

[9] A laminate comprising a color filter layer, and a polarizing film of any one of [1] to [8].

[10] A liquid crystal display device comprising a polarizing film of any one of [1] to [8].

[11] The liquid crystal display device of [10], wherein the polarizing film is disposed in a liquid crystal cell.

[12] The liquid crystal display device of [11], wherein the polarizing film is disposed between a color filter layer and a liquid crystal layer.

[13] The liquid crystal display device of any one of [10] to [12], comprising
first and second external polarizing plates,
a liquid crystal cell disposed therebetween, and
the polarizing film and a color filter layer being disposed in the liquid crystal cell,
wherein the liquid crystal display device satisfies the relational expression below:

$$DI'/P' < DI_{1CF}/P_{1CF}$$

where, P' and DI' represent degree of polarization and depolarization index, respectively, of the polarizing film; and $P_{1CF}$ and $DI_{1CF}$ represent degree of polarization and depolarization index, respectively, of a combination of the color filter layer and the first external polarizing plate disposed more closer to the color filter layer, which are calculated respectively from the equations below:

$$DI_{1CF} = 1 - P_{1CF}^{\ 2}$$

$$P_{1CF} = P(1 - DI_{CF})$$

P: degree of polarization of the first external polarizing plate; and
$DI_{CF}$: depolarization index of the color filter layer.

According to the present invention, it is possible to provide a polarizing film, contributive to moderate depolarization possibly induced by various components, such as color filter, disposed in the liquid crystal cell. The liquid crystal display device, having the polarizing film in the liquid crystal cell, is not only successfully suppressed in leakage of light in the black state but also improved in brightness in the white state.

BRIEF DESCRIPTION OF THE DRAWINGS

FIG. 1 is a schematic sectional view of a liquid crystal display device according to one embodiment of the present invention;
FIG. 2 is a schematic sectional view partially illustrating an exemplary color filter layer applicable to the present invention;
FIG. 3 is a schematic sectional view of a liquid crystal display device according to another embodiment of the present invention; and
FIGs. 4A and 4B are schematic sectional views of a liquid crystal display device according to still another embodiment of the present invention.

Reference numerals used in the drawings represent as follow:

10, 10', 10'': liquid crystal cell;
12a, 12b: external polarizing layer;
14, 14', 16, 16': cell substrate;
18, 18': color filter layer;
20, 20': internal polarizing layer (the polarizing film of the present invention);
22, 22': transparent electrode layer;
24, 24': pixel electrode layer;
26: liquid crystal layer; and
28: reflective layer.

DETAILED DESCRIPTION OF THE INVENTION

The present invention will be detailed below. Note that, in this patent specification, all numerical ranges expressed using "to" mean ranges including the numerals placed therebefore and thereafter as the lower limit value and the upper limit value.

The present invention relates to a polarizing film which satisfies a predetermined optical characteristic. The polarizing film of the present invention is useful as an in-cell polarizer. An exemplary liquid crystal display device having the polarizing film of the present invention is a liquid crystal display device having a first and a second external polarizing layer, a liquid crystal cell disposed therebetween, and the polarizing film of the present invention disposed in the liquid crystal cell. In this embodiment, the polarizing film is used for moderating depolarization possibly induced by various components disposed in the liquid crystal cell, in particular by a color filter layer. For this purpose, it may be preferable to dispose the color filter layer, the internal polarizing layer and a driven liquid crystal layer, disposed in this order in the liquid crystal cell.

Paragraphs below will explain an embodiment having a first external polarizing layer, the color filter layer, the internal polarizing layer (the polarizing film of the present invention), the driven liquid crystal layer, and the second external polarizing layer stacked in this order.

The internal polarizing layer is disposed so that the transmission axis thereof keeps a predetermined relation with the transmission axes of the first and the second external polarizing layers, in order to avoid degradation in the display performance. Preferable relation among the in-plane directions of the transmission axes of the first external polarizing layer, the internal polarizing layer, and the second external polarizing layer varies, depending on whether the driven liquid crystal layer is expected to give a retardation of approximately zero or λ/2 in the black state, with respect

to a polarized light incident on the liquid crystal cell. In one embodiment in which the driven liquid crystal layer gives a retardation of approximately zero in the black state, it is preferable to set the angle of transmission axis of the internal polarizing layer to 0˚, and to set the angle of the transmission axis of the second external polarizing layer to 90˚, while assuming the azimuth angle of the transmission axis of the first external polarizing layer as 0˚. On the other hand, for another embodiment in which the driven liquid crystal layer gives a retardation of approximately λ/2 in the black state, it is preferable to set the angle of transmission axis of the internal polarizing layer to 0˚, and to set the angle of the transmission axis of the second external polarizing layer again to 0˚, while assuming the azimuth angle of the transmission axis of the first external polarizing layer as 0˚. In whichever embodiment, angles of the transmission axes of the first external polarizing layer and the internal polarizing layer preferably coincide.

As for direction of incidence of light on the liquid crystal display device, whichever embodiment allowing incidence of light on the internal polarizing layer prior to incidence on the driven liquid crystal layer, in other words, allowing incidence of light from the outside of the first external polarizing layer, or embodiment allowing incidence of light on the internal polarizing layer after incidence on the driven liquid crystal layer, in other words, allowing incidence of light from the outside of the second external polarizing layer, may be adoptable. In the embodiment allowing incidence of light from the outside of the first external polarizing layer, the light is polarized by the first external polarizing layer, depolarized by scattering while passing through the color filter layer to produce light mixed with non-polarized light, and again polarized while passing through the internal polarizing layer before incidence on the driven liquid crystal layer, thereby leakage of light ascribable to the depolarization by the color filter layer may be suppressed. On the other hand, in the embodiment allowing incidence of light from the outside of the second external polarizing layer, the light is polarized by the second external polarizing layer, and then allowed to pass through the driven liquid crystal layer in the black state, but the most part of the light is then absorbed while passing through the internal polarizing layer which is disposed in the cross-Nicol relation with the light output from the driven liquid crystal layer. Since only a few amount of light is input to the color filter layer, so that the amount of depolarized light ascribable to the scattering may be suppressed to a low level.

By making use of the operation of the internal polarizing layer, it may also be possible to produce a liquid crystal display device, having the color filter layer, the internal polarizing layer, the driven liquid crystal layer, and the second external polarizing layer stacked in this order, without using the first external polarizing layer.

As described in the above, leakage of light in the black state ascribable to the depolarization by the color filter layer may be suppressed by disposing the internal polarizing layer in the liquid crystal cell. However, in practice, also the internal polarizing layer induces the depolarization. It may, therefore, be said that the disposition of the internal polarizing layer does not always improve the contrast of the liquid crystal display device. Possible causes for the depolarization may be exemplified by scattering ascribable to surface irregularity, scattering ascribable to population density distribution or alignment distribution of material molecules in the layer, and so forth. Of course also the internal polarizing layer, composed of a certain substance, may similarly cause scattering.

On the other hand, in the white state, a polarized light having the direction of electric field nearly equal to the direction of the transmission axis of the internal polarizing layer may be allowed to pass, irrespective of direction of incidence of light from the outside of the first external polarizing layer or from the outside of the second external polarizing layer. It is, however, difficult to produce a polarizing layer allowing therethrough 100% transmission of light nearly in the direction of the transmission axis, only to inevitably lower the amount of light output through the internal polarizing layer. It is, therefore, necessary to elevate the transmittance value of the internal polarizing layer nearly in the direction of the transmission axis, for the purpose of obtaining a desirable white state.

The present inventors then predicted the contrast ratio based on parameters which represent optical characteristics of the individual components in the liquid crystal display device, and examined characteristics capable of giving the highest contrast ratio.

Methods adopted herein are a method of measuring depolarization index ascribable to the color filter, and a method of predicting contrast of the liquid crystal display device using the same, making use of the Mueller matrix, which are typically proposed by Y. Utsumi et a/., SID 08 Digest, 129 (2008); Y. Utsumi et al., Euro Display 2005 301 (2005), and so forth.

Procedures of the method of prediction are as follow:

First, the Mueller matrices of the individual components are determined.

$$M_{Pol} = T_{Pol}\begin{pmatrix} 1 & P & 0 & 0 \\ P & 1 & 0 & 0 \\ 0 & 0 & \cdots & \cdots \\ 0 & 0 & \cdots & \cdots \end{pmatrix}$$

for polarizing plate having transmission axis with azimuth=0°

P: degree of polarization of polarizing plate;
$T_{Pol}$: transmittance value of polarizing plate.

$$M_{Pol} = T_{Pol}\begin{pmatrix} 1 & -P & 0 & 0 \\ -P & 1 & 0 & 0 \\ 0 & 0 & \cdots & \cdots \\ 0 & 0 & \cdots & \cdots \end{pmatrix}$$

for polarizing plate having transmission axis with azimuth=90°

$$M_{CF} = T_{CF}\begin{pmatrix} 1 & 0 & 0 & 0 \\ 0 & 1-DI_{CF} & 0 & 0 \\ 0 & 0 & 1-DI_{CF} & 0 \\ 0 & 0 & 0 & 1-DI_{CF} \end{pmatrix}$$

$DI_{CF}$: depolarization index of color filter;
$T_{CF}$: transmittance value of color filter.

$$M_{LC} = T_{LC}\begin{pmatrix} 1 & 0 & 0 & 0 \\ 0 & 1-DI_{LC} & 0 & 0 \\ 0 & 0 & 1-DI_{LC} & 0 \\ 0 & 0 & 0 & 1-DI_{LC} \end{pmatrix}$$

$DI_{LC}$: depolarization index of liquid crystal cell;
$T_{LC}$: transmittance value of liquid crystal cell.

Then the Mueller matrices of the individual components are multiplied, to thereby determine transmittance value I of the liquid crystal display device.

$$M_{Pol1} M_{LC} M_{CF} M_{Pol2} \begin{pmatrix} 1 \\ 0 \\ 0 \\ 0 \end{pmatrix} = \begin{pmatrix} I \\ M \\ C \\ S \end{pmatrix}$$

Contrast of the liquid crystal display device may be calculated based on parameters obtained from the individual components, by calculating the transmittance value for both embodiments in which the transmission axes of two polarizing plates are aligned in the same direction, corresponding to the white state of the liquid crystal display device, and in which they are aligned 90° from each other, corresponding to the black state, and then calculating (transmittance value in the white state)/(transmittance value in the black state).

The present inventors, however, found out from our investigations that a value of contrast, obtained for the embodiment in which a linear polarizing layer was disposed between the color filter and the driven liquid crystal layer, calculated by directly applying $M_{Pol}$ having the above-described form to the Mueller matrix of the internal polarizing layer, was far larger than a measured value, only to result in failure in predicting the contrast. From further investigations, the present inventors also found out that also the internal polarizing layer shows depolarization, and that the Mueller matrix in a form given below may rationally be adoptable.

$$M_{InPol} = T' \begin{pmatrix} 1 & P' & 0 & 0 \\ P' & 1-DI' & 0 & 0 \\ 0 & 0 & \cdots & \cdots \\ 0 & 0 & \cdots & \cdots \end{pmatrix}$$

P': degree of polarization of internal polarizing layer;
DI': depolarization index of internal polarizing layer;
T': transmittance value of internal polarizing layer.

The present inventors then calculated the contrast ratios for both embodiments in which a liquid crystal display device has the internal polarizing layer disposed in the liquid crystal cell, and has no internal polarizing layer, using the above-described Mueller matrix, and found out from the comparison therebetween that the contrast ratio of the liquid crystal display device may be elevated by disposition of the internal polarizing layer, if the conditions below are satisfied:

$$\frac{DI'}{P'} \rangle \frac{DI_{1CF}}{P_{1CF}}$$

DI': depolarization index of internal polarizing layer;
P': degree of polarization of internal polarizing layer;
$DI_1$: depolarization index of combination of first external polarizing layer and color filter layer;

$$DI_{1CF} = 1 - P_{1CF}{}^{2}$$

$P_{1CF}$: degree of polarization of combination of first external polarizing layer and color filter layer;

$$P_{1CF} = P(1 - DI_{CF})$$

P: degree of polarization of first external polarizing layer;
$DI_{CF}$: depolarization index of color filter layer.

In short, if DI'/P', which is an index represented by a ratio of the depolarizability to polarizability of the internal polaizer layer, is smaller than $DI_{1CF}/P_{1CF}$, which is a n index represented by a ratio of the depolarizability to polarizability of a combination of the first external polarizing layer and the color filter layer, then the contrast ratio of the liquid crystal display device of the internal polarizing layer may be improved to a larger degree, by using the internal polarizing layer.

Procedures of obtaining the individual parameters of the Mueller matrices are as follow:

A diffusive light source such as a back light used for liquid crystal display device is obtained, two external polarizing layers are disposed in front thereof in the cross-Nicol arrangement, or in a parallel arrangement, and the brightness values for both embodiments are measured.

$$P = \sqrt{\frac{Cont - 1}{Cont + 1}}$$

$$Cont = \frac{\text{brightness under parallel arrangement}}{\text{brightness under cross-Nicol arrangement}}$$

Procedures of obtaining the degree of polarization P' of the internal polarizing layer are as follow:

A diffusive light source such as a back light used for liquid crystal display device is obtained, two internal polarizing layers are disposed in front thereof in the cross-Nicol arrangement, or in a parallel arrangement, and the brightness for both embodiments are measured.

$$P' = \sqrt{\frac{Cont - 1}{Cont + 1}}$$

$$Cont = \frac{\text{brightness under parallel arrangement}}{\text{brightness under cross-Nicol arrangement}}$$

Procedures of obtaining the depolarization index DI' of the internal polarizing layer are as follow:

A diffusive light source such as a back light used for liquid crystal display device is obtained, and the first measuring polarizing layer, the internal polarizing layer and the second measuring polarizing layer are disposed in front thereof while being stacked in this order.

Given now that brightness, observed through the polarizing layers having the azimuths of the transmission axes of a°, b° and c°, respectively, is written as [a/b/c], the depolarization index DI' is calculated by the equation below, where P represents the degree of polarization of the measuring polarizing layer:

$$DI' = \frac{1+2PP'+P^2+X(P^2-1)}{P^2(1+X)}$$

$$X = \frac{[0/0/0]}{[0/90/90]}$$

Procedures of obtaining the transmittance value T' of the internal polarizing layer are as follow:

A diffusive light source such as a back light used for liquid crystal display device is obtained, and the brightness, referred to as light source brightness, is measured. The internal polarizing layer is then disposed in front thereof, and the brightness, referred to as single layer brightness of the internal polarizing layer, is measured. The transmittance value T' may be calculated from the equation below:

$$T' = \frac{\text{single layer brightness of internal polarizing layer}}{\text{light source brightness}}$$

The transmittance value may be determined by similar procedures also for the color filter layer, the liquid crystal cell, and the external polarizing layer.

Procedures of obtaining the depolarization index $DI_{CF}$ of the color filter layer are as follow:

A diffusive light source such as a back light used for liquid crystal display device is obtained, and the first polarizing layer for measuring, the color filter layer, and the second polarizing layer for measuring are disposed in front thereof while being stacked in this order. The brightness values obtained under parallel arrangement and the cross-Nicol arrangement of the first and second polarizing layers for measuring, referred to as parallel brightness and cross-Nicol brightness, are measured. By using the ratio Cont of these values, the depolarization index $DI_{CF}$ may be calculated from the equation below, where P represents the degree of polarization of the polarizing layer for measuring.

$$DI_{CF} = 1 - \frac{1}{P^2}\frac{Cont-1}{Cont+1}$$

$$Cont = \frac{\text{brightness under parallel arrangement}}{\text{brightness under cross-Nicol arrangement}}$$

From the investigations described in the above, while taking various characteristics of the currently-available external polarizing layer, and various components disposed in the liquid crystal cell into consideration, the present inventors found out that the black state may be improved, almost without inducing adverse effect by the internal polarizing layer *per se,* if the degree of polarization P' and the depolarization index DI' of the internal polarizing layer satisfy the relation of $DI'/P' \leq 4.3 \times 10^{-4}$. In the present invention, DI'/P' of the internal polarizing layer is preferably equal to or smaller than $3.5 \times 10^{-4}$, and more preferably equal to or smaller than $2.5 \times 10^{-4}$. While the smallest possible value may be preferable as the lower limit, where the theoretical limit is zero, a value of $10^{-6}$ or larger is not problematic, and even a value of $10^{-5}$ or larger is not substantially problematic.

The degree of polarization P' and the depolarization index DI' of the polarizing film of the present invention are

not specifically limited, so far as the above-described relation is satisfied. In general, the degree of polarization P’ is preferably equal to or larger than 0.4. The internal polarizing layer having the degree of polarization P’ of smaller than 0.4 does not function as the polarizing layer. The degree of polarization P’ is more preferably equal to or larger than 0.5, and still more preferably equal to or larger than 0.6. The upper limit value is preferably set to as close as possible to 1, which is the theoretical limit value, and preferably falls in the range from 0.4 to 1.0. A degree of polarization P’ of 0.99 or smaller is not problematic, a value of 0.95 or smaller is not substantially problematic, and even a value of 0.90 or smaller is almost not problematic.

In general, the depolarization index DI’ of the polarizing film of the present invention is preferably equal to or smaller than $3.5\times10^{-4}$, more preferably equal to or smaller than $2\times10^{-4}$, and still more preferably equal to or smaller than $1\times10^{-4}$. While the lower limit value is preferably set to as close as possible to zero, which is the theoretical limit value, a value of $10^{-6}$ or larger is not problematic, and even a value of $10^{-5}$ or larger is not substantially problematic.

The transmittance value of the polarizing film of the present invention is preferably equal to or larger than 30%, and more preferably equal to or larger than 35%. The transmittance value of smaller than 30% may result in lowered brightness of the white state, so that the contrast ratio is not improved even if the leakage of light in the black state is moderated. While the transmittance value may preferably be set to as large as possible, where the practical transmittance value of the polarizing film produced using currently-available materials may be 70% or around at a maximum, and may generally be 60% or smaller.

In the present invention, there is no special limitation on the relation between the depolarization index DI’ of the internal polarizing layer and the depolarization index $DI_{CF}$ of the color filter layer. The effect of the present invention may be obtained, if only the above-described relation is satisfied, under whichever condition of $DI'=DI_{CF}$ and $DI'>DI_{CF}$. It is, however, preferable that the DI’ does not exceed $2.5\times DI_{CF}$.

In the present invention, since the polarizing film which satisfies the above-described relation is used as the internal polarizing layer so as to obtain the effect of the present invention, so that the other components, such as the first and second external polarizing layers disposed outside the liquid crystal cell, and the liquid crystal cell, may be configured by using any of those generally available.

For example, a general linear polarizing film may be adoptable to the first and second polarizing layers, the degree of polarization of which is preferably equal to or larger than 0.999, more preferably equal to or larger than 0.9999, and still more preferably equal to or larger than 0.99995. While the upper limit value is preferably set to as close as possible to 1, which is the theoretical limit value, a value of 0.999999 or smaller may be adoptable, and even a value of 0.99999 or smaller is not substantially problematic.

There is no special limitation also on the liquid crystal cell. Any general liquid crystal cell, having a driven liquid crystal layer, and additionally having a color filter layer, an electrode layer, alignment films and so forth, may be adoptable. In general, the depolarization index of the liquid crystal cell is around $10^{-3}$ or smaller, preferably equal to or smaller than $5\times10^{-4}$, and more preferably equal to or smaller than $2\times10^{-4}$. While the lower limit value is preferably set to as close as possible to 0, which is the theoretical limit value, a value of $10^{-5}$ may be good enough, and even a value of $2\times110^{-5}$ or larger is not substantially problematic.

Also to the color filter layer, any general ones may be adoptable. The depolarization index of the general color filter layer is equal to or smaller than $1.0\times10^{-3}$, preferably equal to or smaller than $2\times10^{-4}$, and more preferably equal to or smaller than $1\times10^{-4}$. While the lower limit value may preferably be set to as close as possible to zero, which is the theoretical limit, a value of $10^{-5}$ or larger is not problematic, and even a value of $2\times10^{-5}$ is not substantially problematic.

Next, an embodiment of the liquid crystal display device of the present invention will be explained, referring to the attached drawings.

FIG. 1 is a schematic sectional view illustrating an embodiment of the liquid crystal display device of the present invention. Note that relative relation of the thickness of the individual components does not comply with the actual relation. The same will apply also to the drawings referred to hereinafter. The back light is disposed on the lower side of the drawings, so that the display screen is directed upward.

The liquid crystal display device illustrated in FIG. 1 has a pair of external polarizing layers 12a and 12b, and a liquid crystal cell 10 disposed therebetween. The liquid crystal cell 10 has a pair of substrates 14 and 16. The upper substrate 14 has, on the inner surface thereof, a color filter layer 18, an internal polarizing layer 20 which is the polarizing film of the present invention, and a transparent electrode layer 22, stacked in this order. On the other hand, the lower substrate 16 has a pixel electrode layer 24 which contains switching elements, disposed on the inner surface thereof. A liquid crystal layer 26 disposed between the substrates 14 and 16 is configured so as to be driven by the transparent electrode layer 22 and the pixel electrode layer 24.

In this embodiment, since the internal polarizing layer 20, configured to satisfy the above-described conditions, is suppressed in the depolarization inherent thereto, so that leakage of light in the black state, ascribable to depolarization by the color filter layer and other various component disposed in the liquid crystal cell, may be moderated.

Directions of the transmission axes of the external polarizing layers 12a and 12b vary depending on desired retardation of the liquid crystal layer 26 in the black state. Both axes are orthogonal to each other in an embodiment

where the retardation of the liquid crystal layer 26 in the black state is approximately zero, whereas both axes are parallel with each other if the retardation is approximately λ/2. The transmission axis of the internal polarizing layer 20 is parallel with the transmission axis of the external polarizing layer 12a in both embodiments.

Note that each of the individual components in FIG. 1 is illustrated to have a uniform structure for the sake of simplicity. For example, FIG. 2 is an exemplary schematic sectional view illustrating a part of a general RGB color filter layer, so that also the color filter layer illustrated in FIG. 1 may be configured to have the individual color layers of red (R), green (G) and blue (B), and a black matrix (BM) disposed thereamong, in a similar manner as illustrated in FIG. 2.

Since FIG. 1 is a schematic drawing, so that the liquid crystal display device may, of course, have other various components owned by general liquid crystal display devices. For example, a retardation layer aimed at optical compensation may be disposed between the liquid crystal cell 10 and each of the external polarizing layers 12a and 12b. Alternatively, a planarizing layer, or an alignment film used for forming the internal polarizing layer, may be disposed between the color filter layer 18 and the internal polarizing layer 20. Still alternatively, an alignment film for controlling alignment of the liquid crystal layer 26 may be disposed respectively between the transparent electrode layer 22 and the liquid crystal layer 26, and between the pixel electrode layer and the liquid crystal layer 26. The same will apply also to the drawings referred to hereinafter.

FIG. 3 illustrates another embodiment of the present invention, which relates to so-called, color-filter-on-array (COA) structure. All identical components illustrated in FIG. 1 will given the same reference numerals or symbols, so as to avoid repetitive detailed explanation.

The liquid crystal display device illustrated in FIG. 3 adopts a liquid crystal cell 10' based on so-called, color-filter-on-array (COA) configuration, in which the color filter layer 18' and the internal polarizing layer 20' are disposed over a pixel electrode 24'.

According to the liquid crystal display device of this embodiment, an effect of reducing leakage of light in the black state by the contribution of the internal polarizing layer 20' may be obtained, similarly to the liquid crystal display device illustrated in FIG. 1, and also an effect of improving brightness in the white state by virtue of adoption of the COA structure may be expectable.

FIGs. 4A and 4B relate to still another embodiment pf the present invention based on a semi-transparent system, wherein FIG. 4A illustrates a structure of a transmissive portion, and FIG. 4B illustrates a reflective portion. Note that all components identical to those in FIG. 1 will be given the same reference numerals or symbols, so as to avoid repetitive explanation.

The liquid crystal display device illustrated in FIGs. 4A and 4B has a semi-transparent liquid crystal cell 10". As illustrated in FIG. 4A, the transmissive portion is configured similarly to the liquid crystal cell 10 illustrated in FIG. 1. On the other hand, as illustrated in FIG. 4B, the reflective portion has a reflective layer 28 disposed between the pixel electrode 24 and the substrate 16, so as to make use of external light coming through the external polarizing layer 12a. According to the liquid crystal display device of this embodiment, an effect of reducing leakage of light in the black state by virtue of the internal polarizing layer 20 may be obtained similarly to the case of liquid crystal display device illustrated in FIG. 1, and also an effect of improving brightness in the white state and an effect of reducing the drive power consumption, by virtue of adoption of the semi-transparent structure which makes use of not only back light beam but also the external light.

Paragraphs below will detail the individual components applicable to the liquid crystal display device of the present invention, in particular the polarizing film of the present invention, while placing a stress on materials and methods preferably applicable to the manufacturing.

[Polarizing film]

Types of the polarizing film of the present invention are not specifically limited. The types of the polarizing film include absorption type represented by iodine-containing polarizing plate; reflection type represented by wire grid polarizing plate; and polarization splitting type represented by Glan-Thompson prism. While any of these types may be adoptable, the reflection type tends to suffer from an increased amount of stray light in the liquid crystal cell due to its non-light-absorptive nature, and may therefore be disadvantageous in terms of suppressing leakage of light in the black state. On the other hand, the polarization splitting type may be shrunk only with difficulty, in the effort of applying it to liquid crystal display. Therefore, the absorption type polarizing layer, free from these problems, may be preferable.

The polarizing film of the present invention preferably has a large degree of polarization and a large transmittance value, in view of satisfying the above-described conditions. Since the transmittance value decreases in proportion with the thickness, so that the polarizing film may preferably be a film having a large degree of polarization despite of its thinness. The polarizing film which satisfies the characteristics is preferably formed using a composition containing one or more species of liquid-crystalline azo dyes.

Among the azo dyes, azo dyes represented by formula (I) are preferable.

(I)

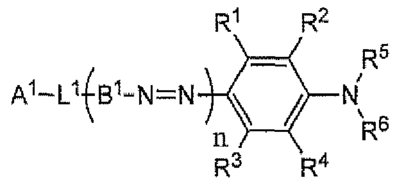

In the formula, $R^1$ to $R^4$ respectively represent a hydrogen atom or a substituent; $R^5$ and $R^6$ respectively represent a hydrogen atom or an optional-substituted alkyl; $L^1$ represents -N=N-, -N=CH-, -C(=O)O- or -OC(=O)-; $A^1$ represents an optionally-substituted phenyl, an optionally-substituted naphthyl, or an optionally-substituted aromatic heterocyclic group; $B^1$ represents an optionally-substituted divalent aromatic hydrocarbon group or an optionally-substituted divalent aromatic heterocyclic group; n is an integer from 1 to 4, and $B^1$ may be same or different when n is equal to or more than 2.

Examples of the substituent represented by $R^1$-$R^4$ respectively include alkyls (preferably $C_{1-20}$, more preferably $C_{1-12}$ and even more preferably $C_{1-8}$ alkyls such as methyl, ethyl, isopropyl, tert-butyl, n-octyl, n-decyl, n-hexadecyl, cyclopropyl, cyclopentyl and cyclohexyl), alkenyls (preferably $C_{2-20}$, more preferably $C_{2-12}$ and even more preferably $C_{2-8}$ alkenyls such as vinyl, allyl, 2-butenyl and 3-pentenyl), alkynyls (preferably $C_{2-20}$, more preferably $C_{2-12}$ and even more preferably $C_{2-8}$ alkynyls such as propargyl and 3-pentynyl), aryls (preferably $C_{6-30}$, more preferably $C_{6-20}$ and even more preferably $C_{2-12}$ aryls such as phenyl, 2,6-diethyl phenyl, 3,5-ditrifluoromethyl phenyl, naphthyl and biphenyl), substituted or non-substituted aminos (preferably $C_{0-20}$, more preferably $C_{0-10}$ and even more preferably $C_{0-6}$ aminos such as non-substituted amino, ethylamino, dimethylamino, diethylamino and anilino), alkoxys (preferably $C_{1-20}$, more preferably $C_{1-10}$ and even more preferably $C_{1-6}$ alkoxys such as methoxy, ethoxy and butoxy), oxycarbonyls (preferably $C_{2-20}$, more preferably $C_{2-15}$ and even more preferably $C_{2-10}$ oxycarbonyls such as methoxycarbonyl, ethoxycarbonyl and phenoxycarbonyl), acyloxys (preferably $C_{2-20}$, more preferably $C_{2-10}$ and even more preferably $C_{2-6}$ acyloxys such as acetoxy and benzoyloxy), acylaminos (preferably $C_{2-20}$, more preferably $C_{2-10}$ and even more preferably $C_{2-6}$ acylaminos such as acetylamino and benzoylamino), alkoxycarbonylaminos (preferably $C_{2-20}$, more preferably $C_{2-10}$ and even more preferably $C_{2-6}$ alkoxycarbonylaminos such as methoxycarbonylamino), aryloxycarbonylaminos (preferably $C_{7-20}$, more preferably $C_{7-16}$ and even more preferably $C_{7-12}$ aryloxycarbonylaminos such as phenyloxycarbonylamino), sulfonylaminos (preferably $C_{1-20}$, more preferably $C_{1-10}$ and even more preferably $C_{1-6}$ sulfonylaminos such as methane sulfonylamino and benzene sulfonylamino), sulfamoyls (preferably $C_{0-20}$, more preferably $C_{0-10}$ and even more preferably $C_{0-6}$ sulfamoyls such as non-substituted sulfamoyl, methyl sulfamoyl, dimethyl sulfamoyl and phenyl sulfamoyl), carbamoyls (preferably $C_{1-20}$, more preferably $C_{1-10}$ and even more preferably $C_{1-6}$ carbamoyls such as non-substituted carbamoyl, methyl carbamoyl, diethyl carbamoyl and phenylcarbamoyl), alkylthios (preferably $C_{1-20}$, more preferably $C_{1-10}$ and even more preferably $C_{1-6}$ alkylthios such as methylthio and ethylthio), arylthios (preferably $C_{6-20}$, more preferably $C_{6-16}$ and even more preferably $C_{6-12}$ arylthios such as phenylthio), sulfonyls (preferably $C_{1-20}$, more preferably $C_{1-10}$ and even more preferably $C_{1-6}$ sulfonyls such as mesyl and tosyl), sulfinyls (preferably $C_{1-20}$, more preferably $C_{1-10}$ and even more preferably $C_{1-6}$ sulfinyls such as methane sulfinyl and benzene sulfinyl), ureidos (preferably $C_{1-20}$, more preferably $C_{1-10}$ and even more preferably $C_{1-6}$ ureidos such as non-substituted ureido, methyl ureido and phenyl ureido), amide phosphate group (preferably $C_{1-20}$, more preferably $C_{1-10}$ and even more preferably $C_{1-6}$ amide phosphate group such as diethyl amide phosphate and phenyl amide phosphate), hydroxy, mercapto, halogen atoms (for example, fluorine atom, chlorine atom, bromine atom and iodine atom), cyano, nitro, hydroxamic group, imino (-CH=N- or -N=CH-), azo group, heterocyclic group (preferably $C_{1-30}$ and more preferably $C_{1-12}$ heterocyclic group having at least one hetero atom selected from nitrogen atom, oxygen atom, sulfur atom and so on including imidazolyl, pyridyl, quinolyl, furyl, piperidyl, morpholino, benzoxazolyl, benzoimidazolyl and benzothiazolyl), and silyl group (preferably $C_{3-40}$, more preferably $C_{3-30}$ and even more preferably $C_{3-24}$ silyl group such as trimethyl silyl and triphenyl silyl.

These substituents may have one or more substituents. Two or more substituents may be same or different. And they may combine to form a ring.

Preferable examples of $R^1$ to $R^4$ include a hydrogen atom, alkyl, alkoxy and a halogen atom, more preferably a hydrogen atom, alkyl and alkoxy, and even more preferably a hydrogen atom and methyl.

The optionally-substituted alkyl represented by $R^5$ or $R^6$ is preferably a $C_{1-20}$, more preferably $C_{1-12}$ and even more preferably $C_{1-8}$ alkyl such as methyl, ethyl and n-octyl. Examples of the substituent of the alkyl represented by $R^5$ or $R^6$ include those exemplified above as a substituent of any of $R^1$ to $R^4$. When $R^5$ or $R^6$ represents an alkyl, it may combine with $R^2$ or $R^4$ to form a ring. Preferably, $R^5$ and $R^6$ represent a hydrogen atom or alkyl respectively; and more preferably, $R^5$ and $R^6$ represent a hydrogen atom, methyl or ethyl respectively.

In the formula, $A^1$ represents an optionally-substituted phenyl, an optionally-substituted naphthyl or an optionally-substituted aromatic heterocyclic group.

The substituent of the phenyl or the naphthyl may be any substituent having at least one group capable of enhancing the solubility or the nematic liquid crystallinity of the azo compound, any substituent having at least one electron-releasing or electron-attracting group capable of controlling the hue of the azo dye, or any substituent having at least one polymerizable group capable of fixing the alignment of the azo compound. And specific examples thereof include those exemplified above as a substituent of any of $R^1$ to $R^4$. Preferable examples of the substituent include optionally-substituted alkyls, optionally-substituted alkenyls, optionally-substituted alkynyls, optionally-substituted aryls, optionally-substituted alkoxys, optionally-substituted oxycarbonyls, optionally-substituted acyloxys, optionally-substituted acylaminos, optionally-substituted aminos, optionally-substituted alkoxycarbonylaminos, optionally-substituted sulfonylaminos, optional-substituted sulfamoyls, optionally-substituted carbamoyls, optionally-substituted alkylthios, optionally-substituted sulfonyls, optionally-substituted ureidos, nitro, hydroxy, cyano, imino, azo and halogen atoms; more preferable examples of the substituent include optionally-substituted alkyls, optionally-substituted alkenyls, optionally-substituted aryls, optionally-substituted alkoxys, optionally-substituted oxycarbonyls, optionally-substituted acyloxys, nitro, imino and azo. Among these substituents, regarding each of those having a carbon atom(s), the preferable range of the number of carbon atoms therein is same as that of the substituent represented by each of $R^1$ to $R^4$.

The phenyl or the naphthyl may have 1 to 5 substituents selected from the above described examples; and preferably, the phenyl or the naphthyl may have one substituent selected from the above described examples. Regarding the phenyl, preferably, it has one substituent selected from the above described examples at a para-position with respect to $L^1$.

The aromatic heterocyclic group may be preferably derived from a monocyclic or bicyclic hetero-ring. The atom, embedded in the aromatic heterocyclic group, other than a carbon atom may be a nitrogen, sulfur or oxygen atom. Two or more hetero atoms embedded in the aromatic heterocyclic group may be same or different from each other. Examples of the aromatic heterocyclic group include pyridyl, quinolyl, thiophenyl, thiazolyl, benzothiazolyl, thiadiazolyl, quinolonyl, Naphthalimido, and thienothiazoly.

Preferably, the aromatic heterocyclic group is pyridyl, quinolyl, thiazolyl, benzothiazolyl, thiadiazolyl, or thienothiazoly; and more preferably, the aromatic heterocyclic group is pyridyl, benzothiazolyl, or thienothiazoly.

Preferably, $A^1$ represents optionally-substituted phenyl, pyridyl, benzothiazolyl, or thienothiazoly.

In the formula, $B^1$ represents an optionally-substituted divalent aromatic hydrocarbon group or an optionally-substituted divalent aromatic heterocyclic group. In the formula, n is an integer from 1 to 4, and $B^1$ may be same or different when n is equal to or more than 2.

Preferable examples of the aromatic hydrocarbon group include phenyl and naphthyl. Preferable examples of the substituent of the aromatic hydrocarbon group include optionally-substituted alkyls, optionally-substituted alkoxys, hydroxy, nitro, halogen atoms, optionally-substituted aminos, optionally-substituted acylaminos and cyano. Among these, optionally-substituted alkyls, optionally-substituted alkoxys and halogen atoms are more preferable; and methyl and halogen atoms are even more preferable.

The aromatic heterocyclic group may be preferably derived from a monocyclic or bicyclic hetero-ring. The atom, embedded in the aromatic heterocyclic group, other than a carbon atom may be a nitrogen, sulfur or oxygen atom. Two or more hetero atoms embedded in the aromatic heterocyclic group may be same or different from each other. Examples of the aromatic heterocyclic group include pyridyl, quinolyl, isoquinolyl, benzothiadiazole, phthalimide, and thienothiazole. Among these, thienothiazole is more preferable.

Examples of the substituent of the aromatic heterocyclic group include alkyls such as methyl and ethyl; alkoxys such as methoxy and ethoxy; aminos such as non-substituted amino and methyl amino; acetylaminos, acylaminos, nitro, hydroxy, cyano and halogen atoms. Among these substituents, regarding each of those having a carbon atom(s), the preferable range of the number of carbon atoms therein is same as that of the substituent represented by each of $R^1$ to $R^4$.

Preferable examples of the azo dye include those represented by any one of formulas (Ia) to (Ic).

(Ia)

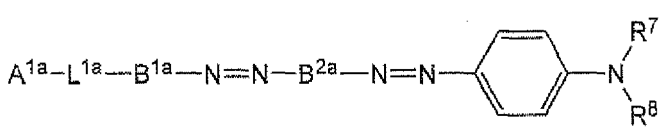

In the formula, $R^7$ and $R^8$ respectively represent a hydrogen atom, methyl or ethyl; $L^{1a}$ represents -N=N-, -N=CH-, -O(C=O)- or -CH=CH-; $A^{1a}$ represents a group (IIa) or (IIIa); and $B^{1a}$ and $B^{2a}$ respectively represent a group (IVa), (Va) or (VIa).

(IIa)

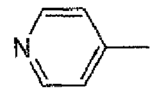

(IIIa)

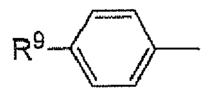

In the formula, $R^9$ represent an optionally-substituted alkyl, an optionally-substituted aryl, an optionally-substituted alkoxy, an optionally-substituted oxycarbonyl, or an optional-substituted acyloxy.

(IVa)

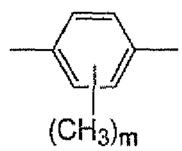

(Va)

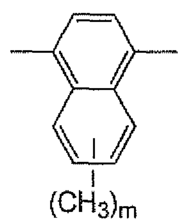

(VIa)

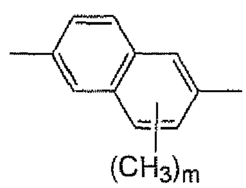

In the formulas, m represents an integer of from 0 to 2.

(Ib)

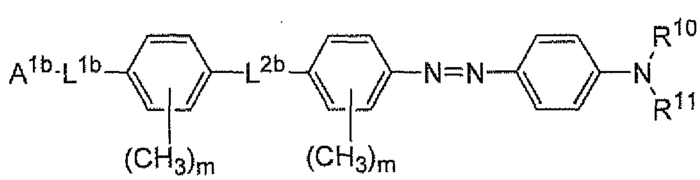

In the formula, $R^{10}$ and $R^{11}$ respectively represent a hydrogen atom, methyl or ethyl; $L^{1b}$ represents -N=N- or -(C=O)O-; $L^{2b}$ represents -N=CH-, -(C=O)O- or -O(C=O)-; $A^{1b}$ represents a group (IIb) or (IIIb);and m represents an integer of from 0 to 2.

(IIb)

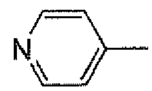

(IIIb)

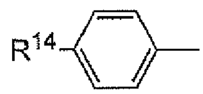

In the formula, $R^{14}$ represents an optionally-substituted alkyl, an optionally-substituted aryl, an optionally-substituted alkoxy, an optionally-substituted oxycarbonyl, or an optionally-substituted acyloxy.

(Ic)

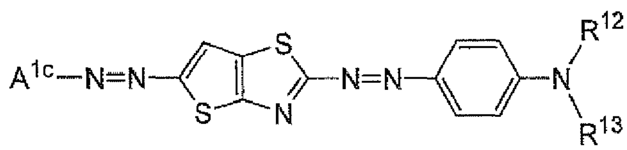

In the formula, $R^{12}$ and $R^{13}$ respectively represent a hydrogen atom, methyl or ethyl; and $A^{1c}$ represents a group (IIc) or (IIIc).

(IIc)

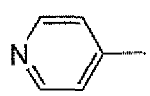

(IIIc)

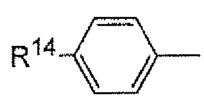

In the formula, $R^{14}$ represents an optionally-substituted alkyl, an optionally-substituted aryl, an optionally-substituted alkoxy, an optionally-substituted oxycarbonyl, or an optionally-substituted acyloxy.

Examples of the substituent of each of the groups in formulas (Ia), (Ib) and (Ic) include those exemplified above as a substituent of any of $R^1$ to $R^4$. Among these substituents, regarding each of those (such as alkyls) having a carbon atom(s), the preferable range of the number of carbon atoms therein is same as that of the substituent represented by each of $R^1$ to $R^4$.

The compound represented by formula (Ia), (Ib) or (Ic) may have one or more polymerizable groups as a substituent. Using the compound having one or more polymerizable groups may contribute to improvement in hardenability. Examples of the polymerizable group include an unsaturated polymerizable group, epoxy group and aziridinyl group; an unsaturated polymerizable group is preferable; and an ethylene unsaturated polymerizable group is more preferable. Examples of the ethylene unsaturated polymerizable group include an acryloyl group and a methacryloyl group.

Preferably, the polymerizable group(s) exists at the molecular end, that is, preferably, the polymerizable group (s) exists as a substituent of $R^5$ and/or $R^6$ or as a substituent of $A^1$ in formula (I).

Examples of the compound represented by formula (I) include, but are not limited to, those described below.

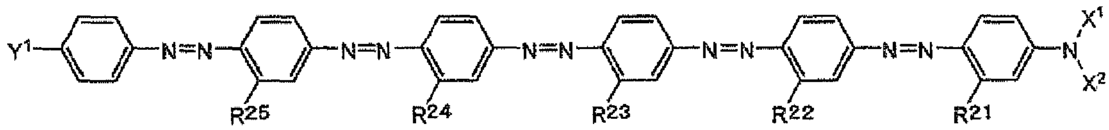

| No. | $X^1$ | $X^2$ | $R^{21}$ | $R^{22}$ | $R^{23}$ | $R^{24}$ | $R^{25}$ | $Y^1$ |
|---|---|---|---|---|---|---|---|---|
| A-1 | $-C_2H_5$ | $-O_2H_5$ | -H | $-OH_3$ | -H | -H | -H | $-C_4H_9$ |
| A-2 | $-C_2H_5$ | $-C_2H_5$ | -H | $-OH_3$ | $-OH_3$ | $-CH_3$ | -H | $-C_4H_9$ |
| A-3 | $-CH_3$ | $-CH_3$ | -H | $-OH_3$ | -H | -H | -H | $-C_4H_9$ |

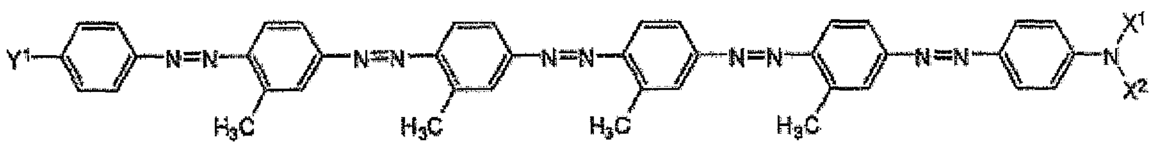

| No. | $X^1$ | $X^2$ | $Y^1$ |
|---|---|---|---|
| A-4 | $-O_2H_5$ | $-C_2H_5$ | 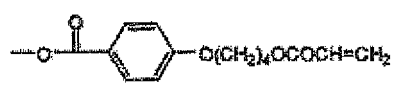 |
| A-5 | $-O_2H_5$ | $-C_2H_5$ | 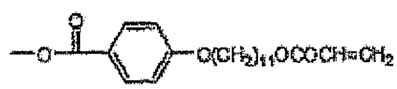 |

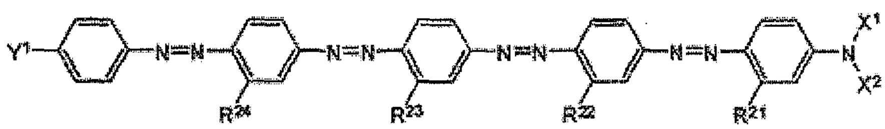

| No. | $X^1$ | $X^2$ | $R^{21}$ | $R^{22}$ | $R^{23}$ | $R^{24}$ | $Y^1$ |
|---|---|---|---|---|---|---|---|
| A-9 | $-C_2H_5$ | $-C_2H_5$ | -H | $-CH_2$ | -H | -H | $-C_4H_9$ |
| A-10 | $-C_2H_5$ | $-C_2H_5$ | -CH3 | -CH3 | -H | -H | $-C_4H_8$ |
| A-11 | $-C_2H_5$ | $-C_2H_5$ | -H | -H $-CH_3$ | $-CH_3$ | $-OH_3$ | $-C_4H_9$ |

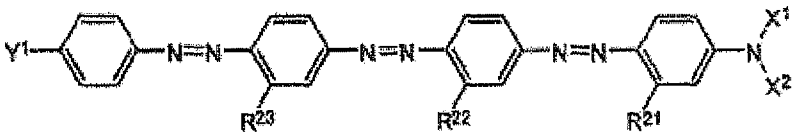

| No. | $X^1$ | $X^2$ | $R^{21}$ | $R^{22}$ | $R^{23}$ | $Y^1$ |
|---|---|---|---|---|---|---|
| A-16 | $-C_2H_5$ | $-C_2H_5$ | -H | -H $-CH_3$ | -H | $-C_4H_9$ |
| A-17 | $-C_2H_5$ | $-C_2H_5$ | -H | $-CH_3$ | $-CH_3$ | $-C_4H_9$ |
| A-18 | $C_2H_5$ | $-C_2H_5$ | -H | -H $-CH_3$ | -H | 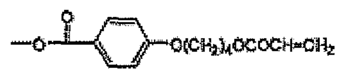 |
| A-19 | $-C_2H_5$ | $-C_2H_5$ | -H | $-CH_3$ | -H | 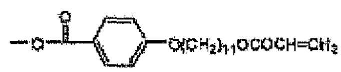 |
| A-24 | $-C_2H_5$ | $-C_2H_5$ | $-OCH_3$ | $-CH_3$ | -H | $-C_4H_9$ |
| A-25 | $-C_2H_5$ | $-C_2H_5$ | -H | $-CH_3$ | $-CH_3$ | 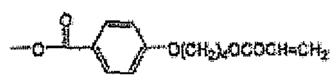 |

A-27

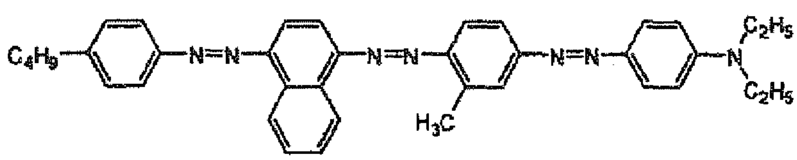

A-28

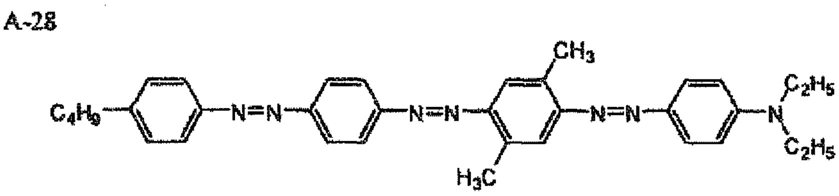

A-29

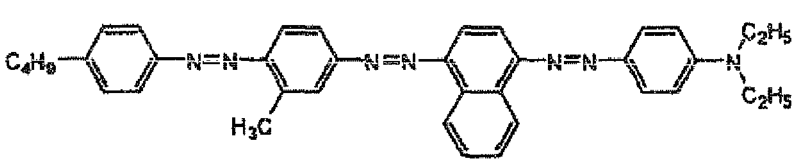

A-30

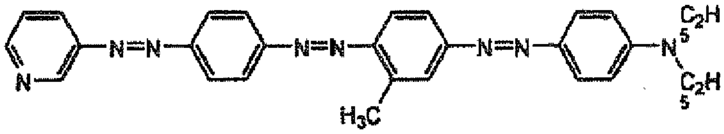

A-31

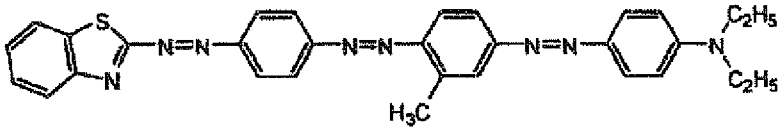

A-32

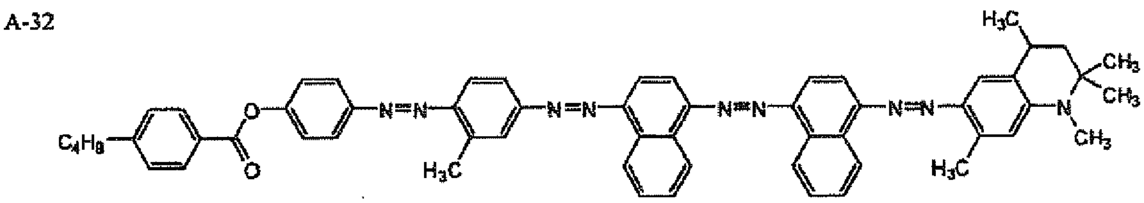

A-33

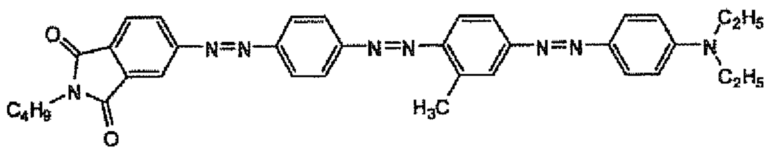

A-34

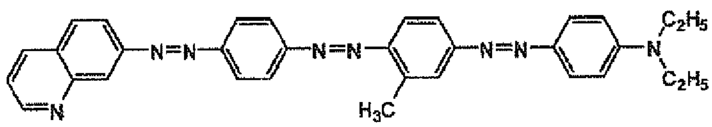

A-35

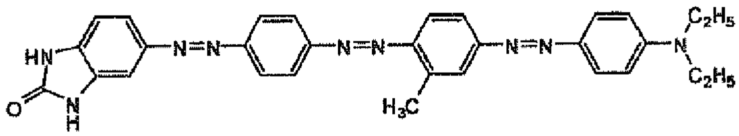

A-36

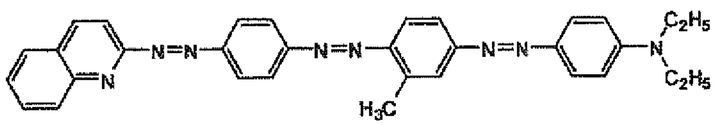

A-37

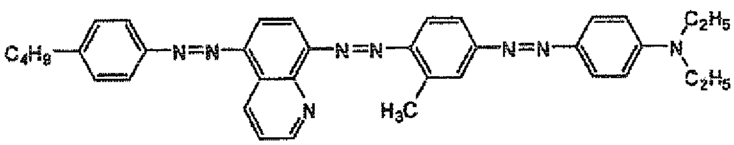

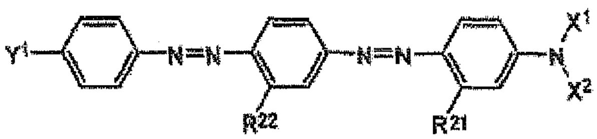

| No. | $X^1$ | $X^2$ | $R^{21}$ | $R^{22}$ | $Y^1$ |
|---|---|---|---|---|---|
| A-38 | $-C_2H_5$ | $-C_2H_5$ | -H | $-CH_3$ | 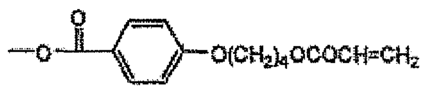 |
| A-40 | $-C_2H_5$ | $-C_2H_5$ | -H | $-CH_3$ | $-C_4H_9$ |

A-41

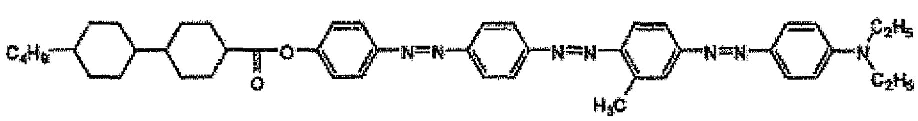

A-42

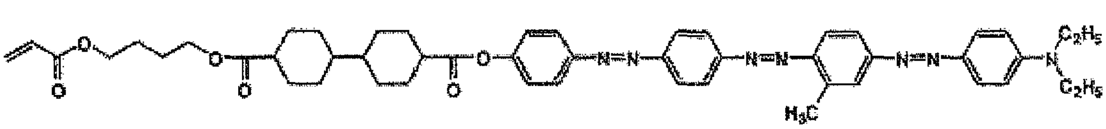

A-45

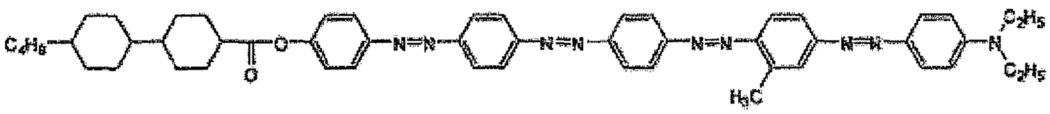

A-46

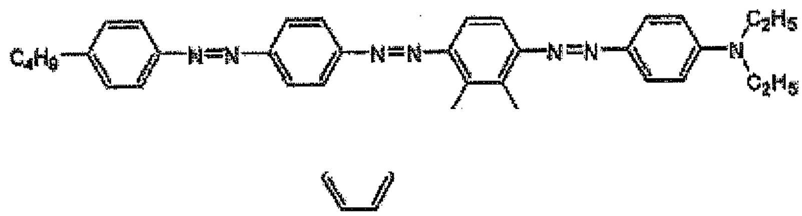

A-47

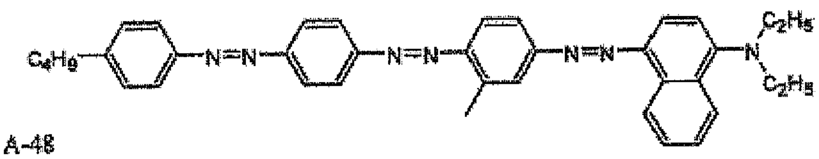

A-48

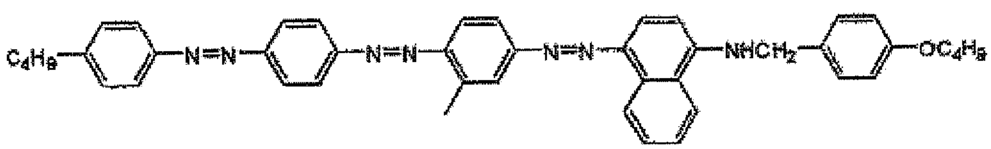

A-50

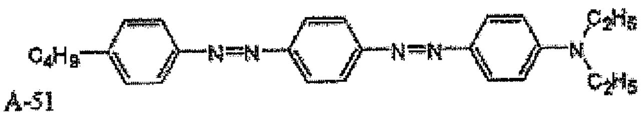

A-51

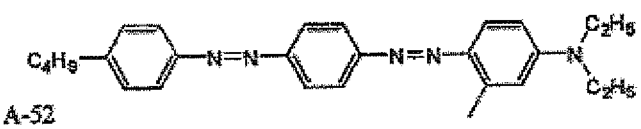

A-52

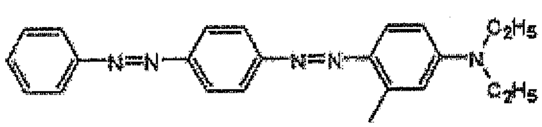

A-53

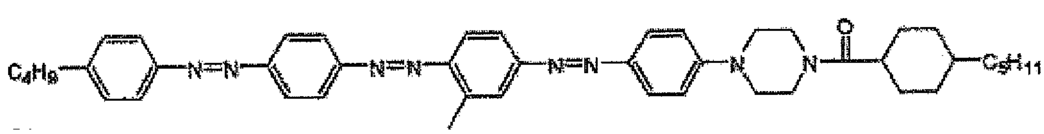

A-54

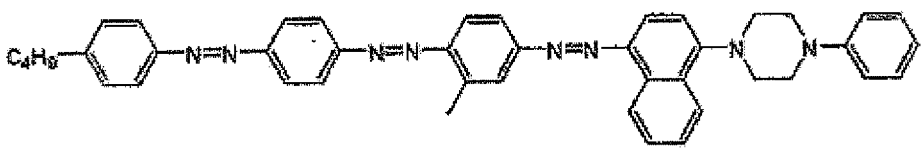

A-55

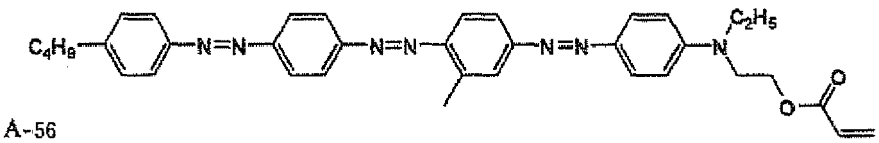

A-56

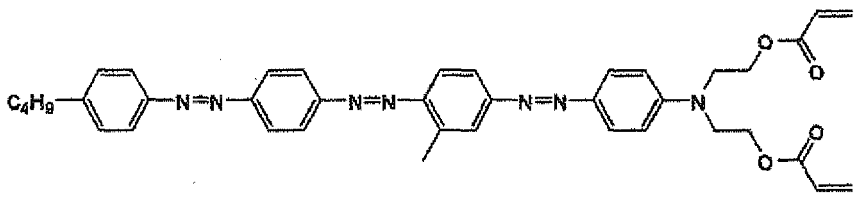

A-57

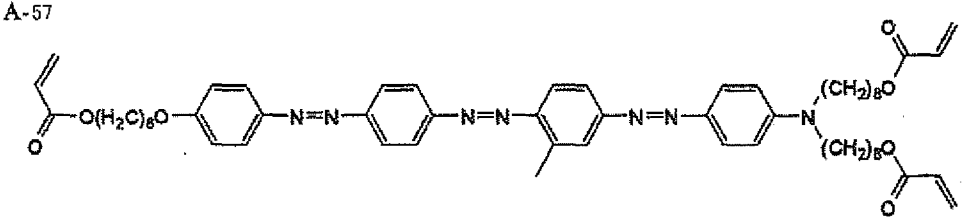

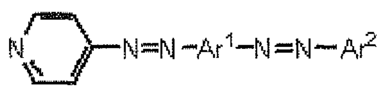

| No. | Ar1 | Ar2 |
|---|---|---|
| B-1 | 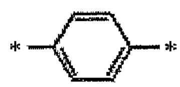 | 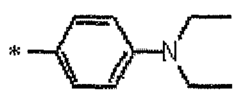 |
| B-2 | 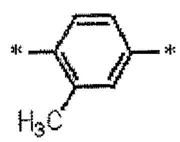 | 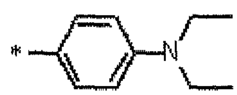 |
| B-3 | 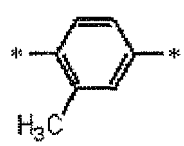 | 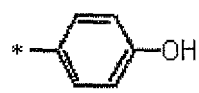 |

(continued)

| No. | Ar1 | Ar2 |
|---|---|---|
| B-4 | 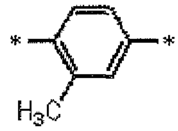 | 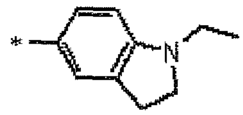 |

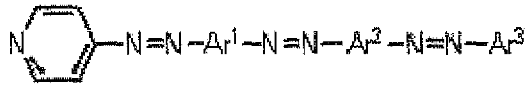

| No. | Ar1 | Ar2 | Ar3 |
|---|---|---|---|
| B-5 | 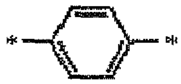 | 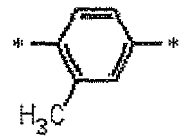 | 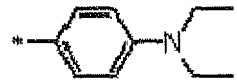 |
| B-6 | 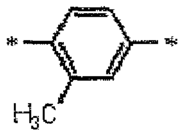 | 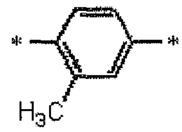 | 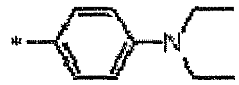 |
| B-7 | 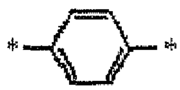 | 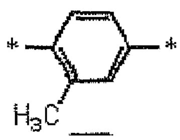 | 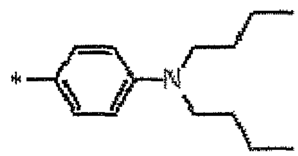 |
| B-8 | 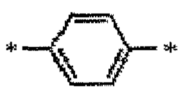 | 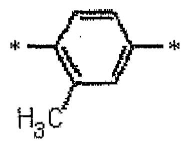 | 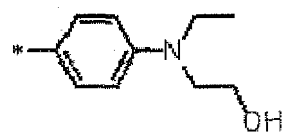 |
| B-10 | 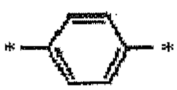 | 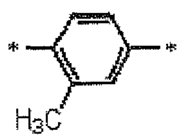 | 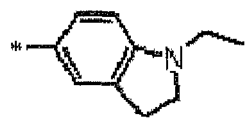 |
| B-11 | 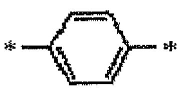 | 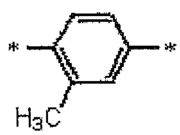 | 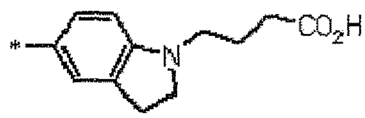 |

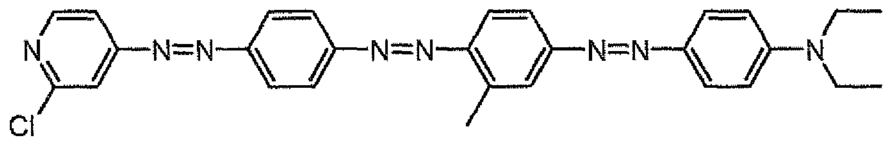

No. B-12

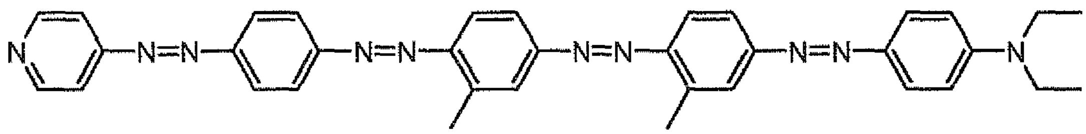

No. B-13

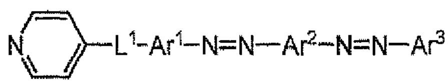

| No. | **$L^1$** | **$Ar^1$** | **$Ar^2$** | **$Ar^3$** |
|---|---|---|---|---|
| B-14 | 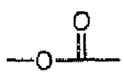 | 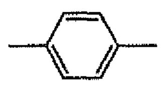 | 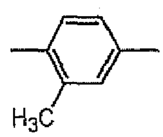 | 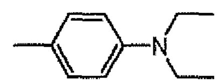 |
| B-15 | 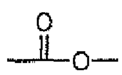 | 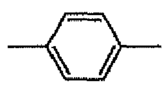 | 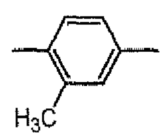 | 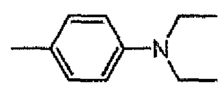 |
| B-16 | 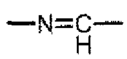 | 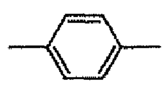 | 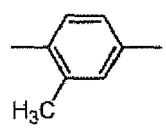 | 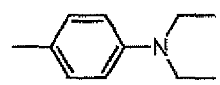 |
| B-17 | 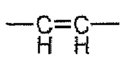 | 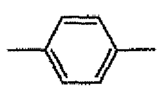 | 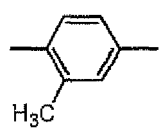 | 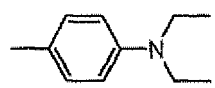 |

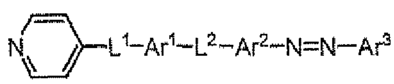

| No. | $L^1$ | $Ar^1$ | $L^1$ | $Ar^2$ | $Ar^3$ |
|---|---|---|---|---|---|
| B-18 | -N=N- | 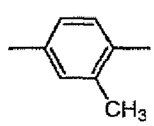 | 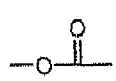 | 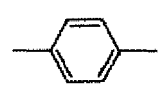 | 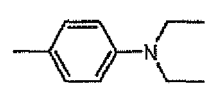 |

(continued)

| No. | $L^1$ | $Ar^1$ | $L^1$ | $Ar^2$ | $Ar^3$ |
|---|---|---|---|---|---|
| B-19 | -N=N- | 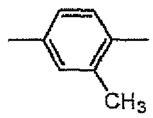 | 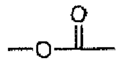 | 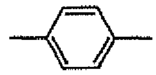 | 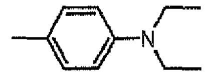 |
| B-20 | -N=N- | 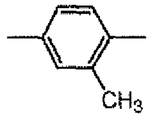 | 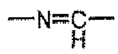 | 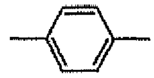 | 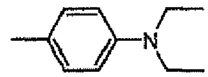 |
| B-21 | 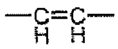 | 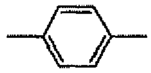 | 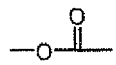 | 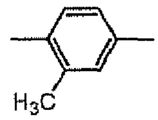 | 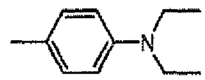 |

C-1 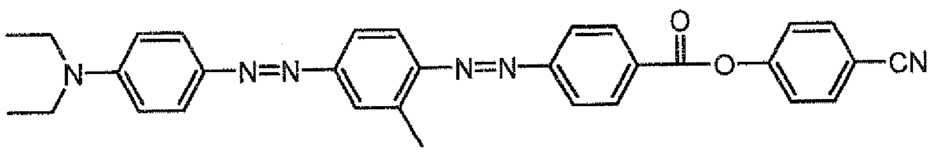

C-2 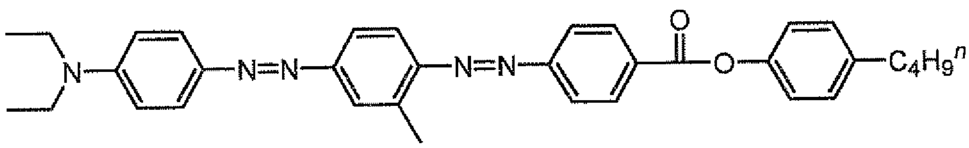

C-3 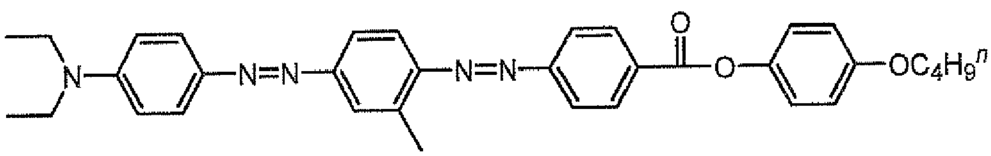

C-4 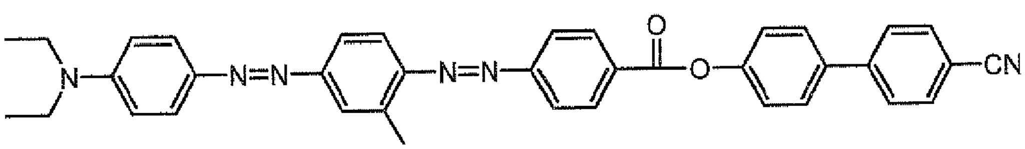

C-5 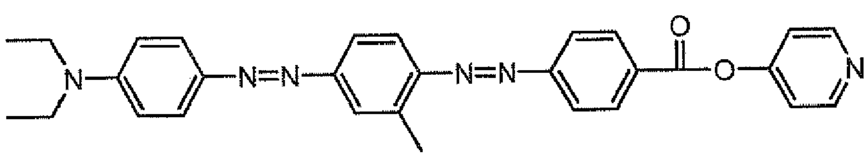

C-6

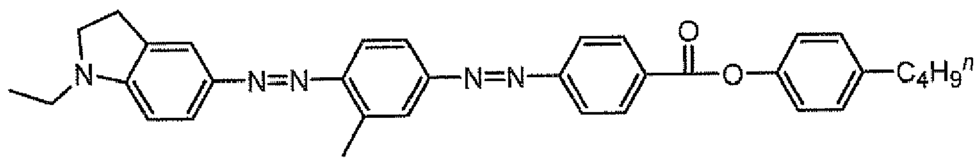

C-7

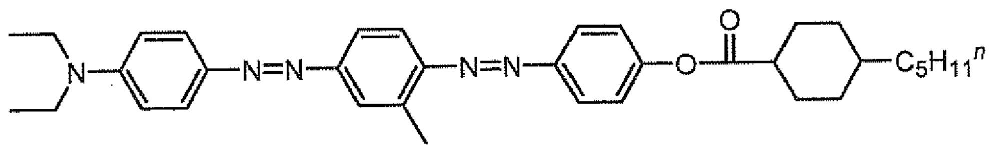

C-8

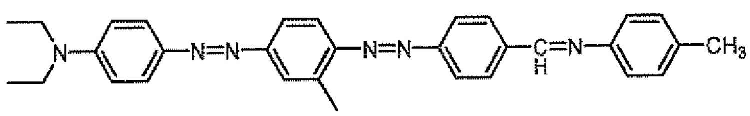

C-9

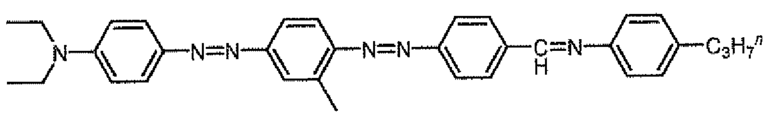

C-10

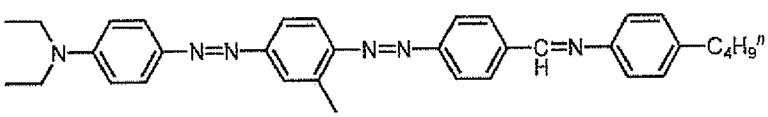

C-11

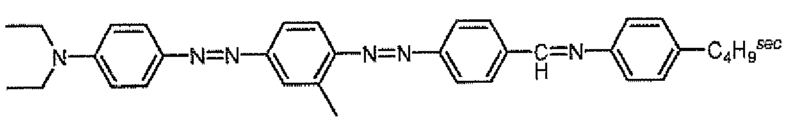

C-12

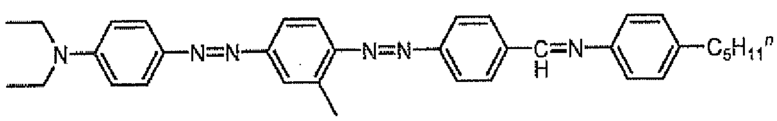

C-13

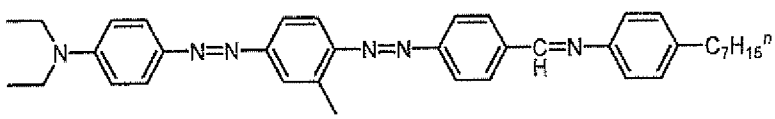

C-14

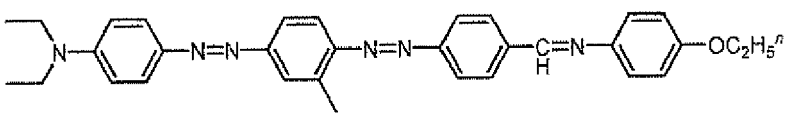

C-15

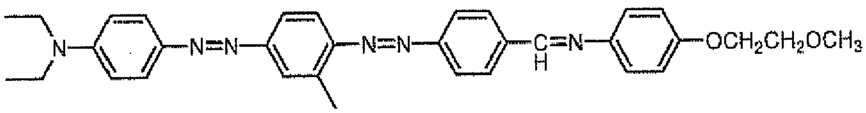

C-16

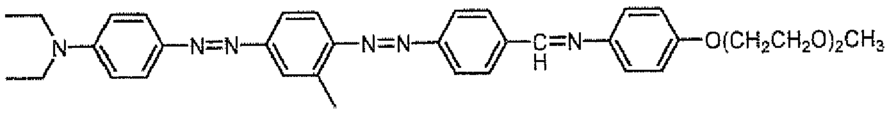

C-17

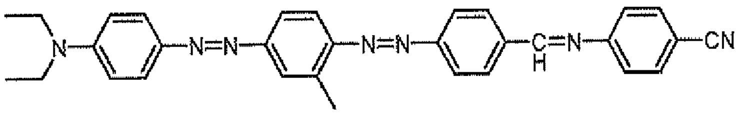

C-18

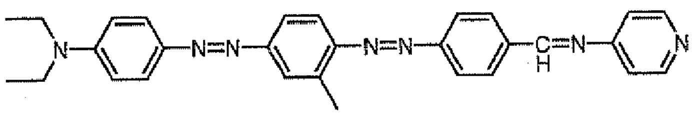

C-19

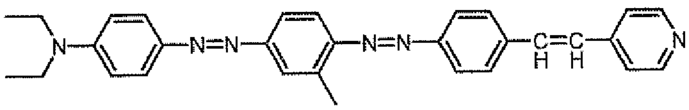

C-20

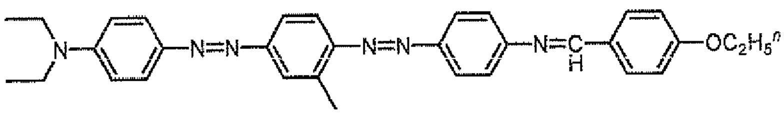

C-21

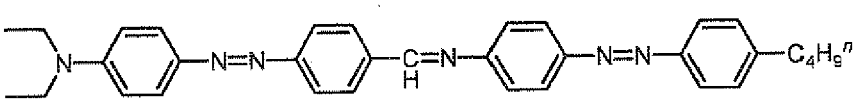

C-22

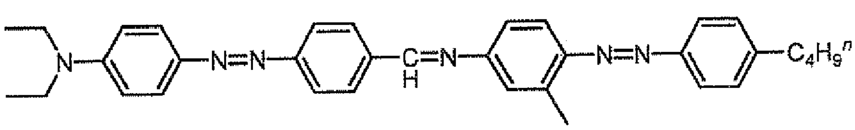

C-23

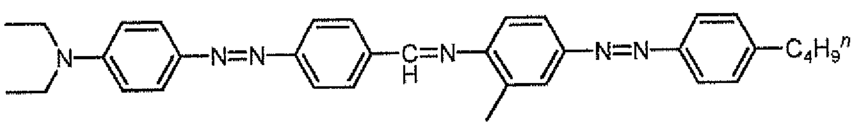

C-24 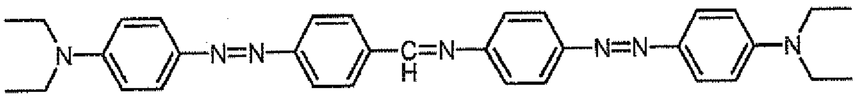

C-25 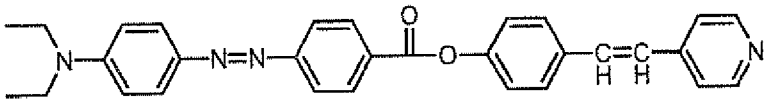

C-26 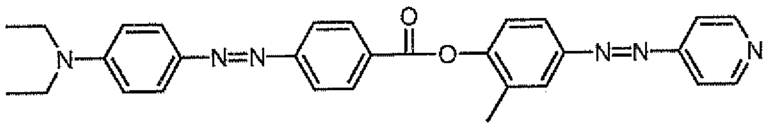

C-27 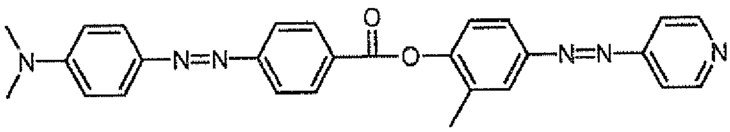

C-28 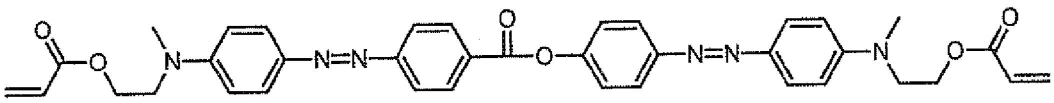

C-29 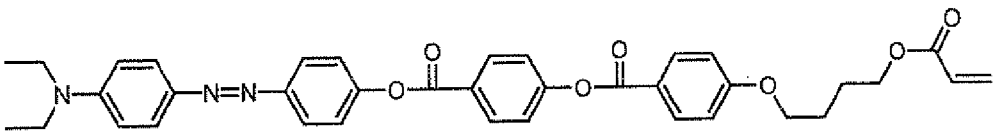

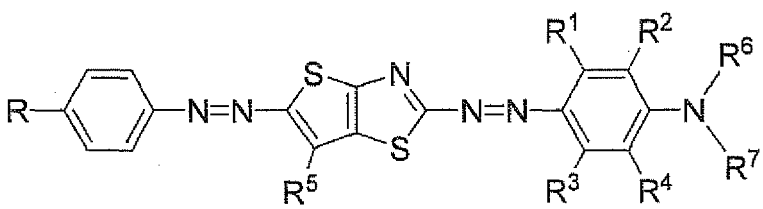

| No. | $R^1$ | $R^2$ | $R^3$ | $R^4$ | $R^5$ | $R^6$ | $R^7$ | R |
|---|---|---|---|---|---|---|---|---|
| D-1 | -H | -H | -H | -H | -H | $-C_2H_5$ | $-C_2H_5$ | $-C_4H_9$ |
| D-2 | -H | -H | -H | -H | -H | $-C_2H_5$ | $-C_2H_3$ | $-C_7H_{15}$ |
| D-3 | -H | -H | -H | -H | -H | $-C_2H_5$ | $-C_2H_5$ | $-DC_4H_9$ |

(continued)

| No. | $R^1$ | $R^2$ | $R^3$ | $R^4$ | $R^5$ | $R^6$ | $R^7$ | R |
|---|---|---|---|---|---|---|---|---|
| D-4 | -H | -H | -H | -H | -H | $-C_2H_5$ | $-C_2H_5$ | $-CF_3$ |
| D-5 | -H | -H | -H | -H | -H | $-C_2H_5$ | $-C_2H_5$ | -OH |
| D-6 | -H | -H | -H | -H | -H | $-C_2H_5$ | $-C_2H_5$ | -CN |
| D-7 | -H | -H | -H | -H | -H | $-C_2H_5$ | $-C_2H_5$ | $-NO_2$ |
| D-8 | -H | -H | -H | -H | -H | $-C_2H_5$ | $-C_2H_5$ | -F |
| D-9 | -H | -H | -H | -H | -H | $-C_2H_5$ | $-C_2H_5$ | -Br |
| D-10 | -H | -H | -H | -H | -H | $-C_2H_5$ | $-C_2H_5$ | -I |
| D-11 | -H | -H | -H | -H | -H | $-CH_3$ | -H | $-C_4H_9$ |
| D-12 | -H | -H | -H | -H | -H | $-CH_3$ | $-CH_3$ | $-C_4H_9$ |
| D-13 | -H | -H | -H | -H | -H | $-CH_3$ | $-C_6H_{13}$ | $-C_4H_9$ |
| D-14 | -H | -H | -H | -H | -H | $-CH_3$ | $-CH_2CH_2OH$ | $-C_4H_9$ |
| D-15 | -H | -H | -H | -H | -H | $-CH_3$ | $-CH_2CH_2OCH_3$ | $-C_4H_9$ |
| D-16 | -H | -H | -H | -H | -H | $-CH_3$ | $-CH_2CH_2OCOCH=CH_2$ | $-C_4H_9$ |
| D-17 | -H | -H | -H | -H | -H | $-CH_3$ | $-CH_2CH_2CN$ | $-C_4H_9$ |
| D-18 | -H | -H | -H | -H | -H | $-CH_2CH_2OCOCH=CH_2$ | $-CH_2CH_2OCOCH=CH_2$ | $-C_4H_9$ |
| D-19 | $-CH_3$ | -H | -H | -H | -H | $-C_2H_5$ | $-C_2H_5$ | $-C_4H_9$ |
| D-20 | -F | -H | -H | -H | -H | $-C_2H_5$ | $-C_2H_5$ | $-C_4H_9$ |
| D-21 | -Cl | -H | -H | -H | -H | $-C_2H_5$ | $-C_2H_5$ | $-C_4H_9$ |
| D-22 | -OH | -H | -H | -H | -H | $-C_2H_5$ | $-C_2H_5$ | $-C_4H_9$ |
| D-23 | $-OCH_3$ | -H | -H | -H | -H | $-C_2H_5$ | $-C_2H_5$ | $-C_4H_9$ |
| D-24 | -H | $-OCH_3$ | $-OCH_3$ | -H | -H | $-C_2H_5$ | $-C_2H_5$ | $-C_4H_9$ |
| D-25 | -H | -H | -H | -H | $-CH_3$ | $-C_2H_5$ | $-C_2H_5$ | $-C_4H_9$ |

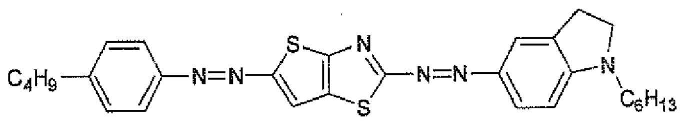

No.D-26

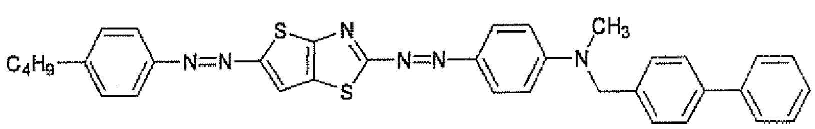

No.D-27

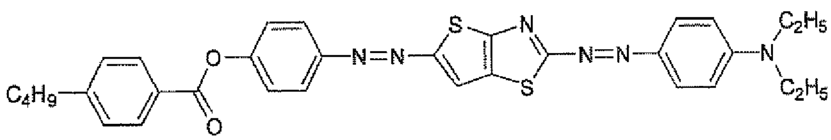

No.D-28

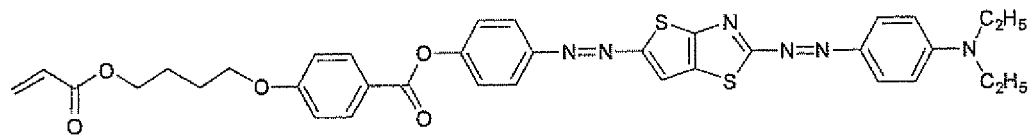

No.D-29

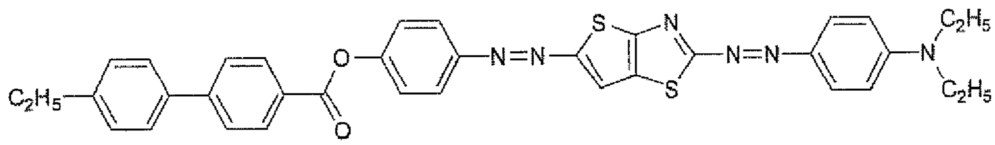

No.D-30

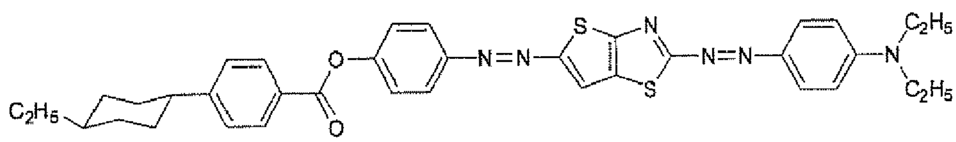

No.D-31

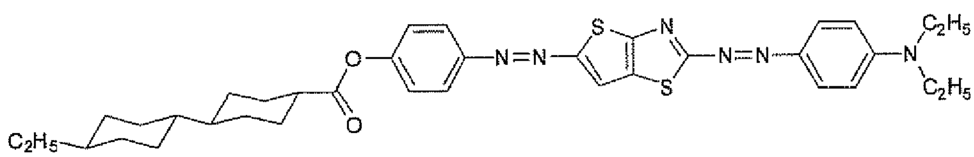

No.D-32

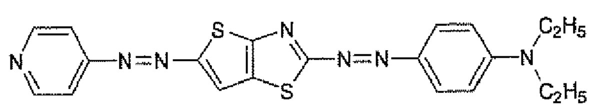

No.D-33

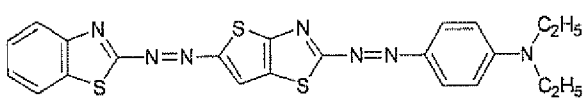

No.D-34

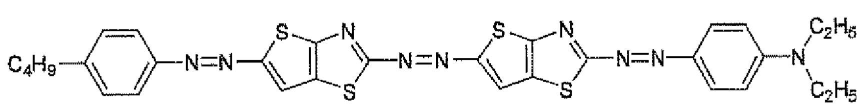

No.D-35

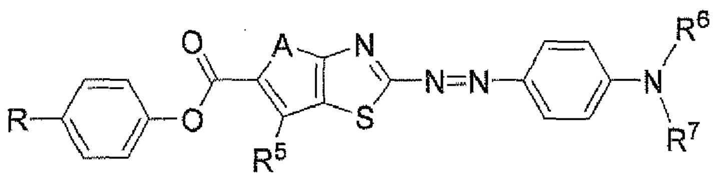

| No. | A | $R^5$ | $R^6$ | $R^7$ | R |
|---|---|---|---|---|---|
| D-36 | S | -H | $-C_2H_5$ | $-C_2H_5$ | $-C_4H_9$ |
| D-37 | S | -H | $-C_2H_5$ | $-C_2H_5$ | $-C_7H_{15}$ |
| D-38 | S | -H | $-C_2H_5$ | $-C_2H_5$ | -CN |
| D-39 | S | -H | $-C_2H_5$ | $-C_2H_5$ | -Br |
| D-40 | S | $-CH_3$ | $-C_2H_5$ | $-C_2H_5$ | $-C_4H_9$ |
| D-41 | S | -H | $-CH_3$ | $-CH_3$ | $-C_4H_9$ |
| D-42 | O | -H | $-C_2H_5$ | $-C_2H_5$ | $-C_4H_9$ |

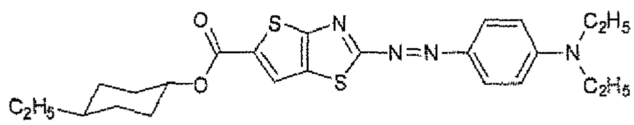

No.D-43

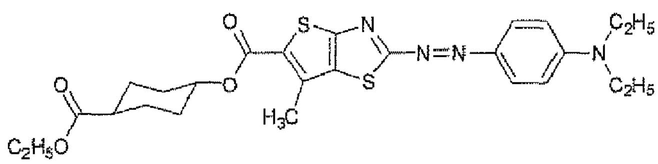

No.D-44

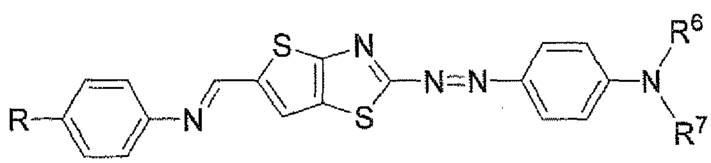

| No. | $R^6$ | $R^7$ | R |
|---|---|---|---|
| D-45 | $-C_2H_5$ | $-C_2H_5$ | $-C_4H_9$ |
| D-46 | $-C_2H_5$ | $-C_2H_5$ | $-OC_4H_9$ |
| D-47 | $-C_2H_5$ | $-C_2H_5$ | $-CF_3$ |
| D-48 | $-C_2H_5$ | $-C_2H_5$ | -F |
| D-49 | $-CH_3$ - | $CH_3$ | $-C_4H_9$ |

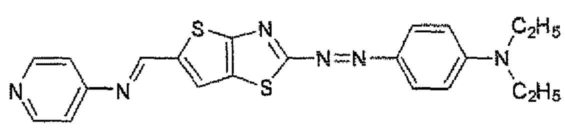

No.D-50

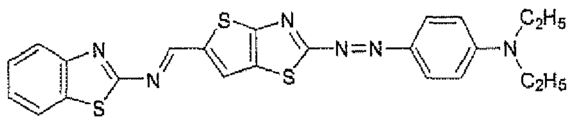

No.D-51

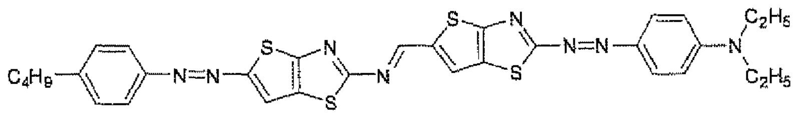

No.D-52

The azo compounds represented by formula (I) may be prepared easily according to the method described in Journal of Materials Chemistry (1999), 9(11), 2755-2763.

Preferably, the azo compound represented by formula (I) exhibits a nematic liquid crystallinity at a temperature of from 10 to 300 degrees Celsius, and more preferably at a temperature of from 100 to 250 degrees Celsius.

In the composition used for forming the polarizing film of the present invention, it is preferable that 30% or more, and more preferably 50% or more, of the liquid crystalline material contained in the composition is colorant compound. The azo dye may align the molecules thereof by the self-aligning ability of their own, and may fix the aligned state, so that a polarizing film capable of exhibiting a large degree of polarization even with a small thickness may be obtained. On the other hand, for an exemplary case of so-called, guest-host (GH) type polarizer, which is formed by using a composition containing a dichroic dye together with a non-chromogenic liquid crystal compound, and by allowing the molecules of the dichroic dye to align along the alignment of the molecules of the non-chromogenic liquid crystal compound, a large degree of polarization may not always be attainable, due to a low degree of alignability of the non-chromogenic liquid crystal compound.

Note that, in the present invention, the phrase of "a certain material exhibits liquid crystallinity" means that the material exhibits, alone by itself, a liquid crystal state at room temperature, after being heated, after being cooled, or after being heated and then cooled. The phrase also means that a certain material exhibits a liquid crystal state after the material alone is dissolved into a solvent.

In the present invention, the phrase of "a certain material exhibits chromogenicity" means that the material shows an absorption peak in the wavelength range from 380 nm to 780 nm, having an intensity of larger than 1/100 of the absorbance of an absorption peak which firstly appears in the wavelength region shorter than 380 nm.

The composition for preparing the polarizing film preferably contains two or more types of the azo dyes represented by formula (I). Any combinations of the azo dyes may be used in the present invention, and for achieving the high polarization degree, preferably, the composition is prepared by mixing the azo dyes so that the composition becomes black.

Preferably, the composition may contain at least one type of the azo dyes represented by formula (Ia) and at least one type of the azo dyes represented by formula (Ib) or (Ic).

More preferably, the composition may contain at least one type of the azo dyes represented by formula (Ia), at least one type of the azo dyes represented by formula (Ib), and at least one type of the azo dyes represented by formula (Ic).

The composition for preparing the polarizing film may contain any coloring material other than the azo dye represented by formula (I) unless the effect of the invention is lowered. Preferably, the coloring material other than the azo dye represented by formula (I) is selected from compounds exhibiting liquid crystallinity.

The composition may contain additives other than the liquid-crystalline azo dye. The additives may be exemplified by surfactant which is added for the purpose of improving the coatability, additive for promoting horizontal alignment of molecules of the liquid-crystalline azo dye, curing component (non-liquid-crystalline monomer and polymerization initiator), and non-liquid-crystalline polymer binder. The content of one or more species of the liquid-crystalline azo dye contained in the composition is preferably 20% by mass or more, and particularly preferably 30% by mass or more.

The polarizing film of the present invention is preferably a film formed by coating the composition. Methods of coating may be any of publicly-known ones, which are exemplified by spin coating, gravure printing, flexographic printing, ink jet printing, die coating, slit die coating, cap coating, dipping and so forth. Among them, the slit coating is particularly preferable. According to the slit coating, a highly uniform film may stably be formed, without exerting shear stress on the coating liquid in the process of coating. In addition, in the slit coating, since the direction of extrusion of the coating liquid through a slit may be agreed with the direction of rubbing of the alignment film described later, the direction of irradiation of light or the like, so that disturbance in the alignment ascribable to disagreement between the direction of spreading of the coating liquid and the direction of rubbing (for example, in the spin coating, the direction of spreading

of the coating liquid cannot be agreed with the direction of rubbing over the entire surface, because the coating liquid is spread over the surface by centrifugal force), may be less likely to occur. According to the slit coating, the polarizing layer excellent in uniformity and dichroism may be formed.

The internal polarizing layer may preferably be formed, making use of an alignment film having a rubbed surface, photo-aligned film and any other alignment films. The alignment film adoptable to the present invention may be any layer, so long as it can allow thereon a desired mode of alignment of molecules of the liquid-crystalline azo dye. The alignment film may be provided typically by rubbing of the surface of organic compound (preferably polymer) film, oblique vacuum evaporation of inorganic compound, formation of a layer having micro-grooves, or stacking of an organic compound (for example, ω-trichosanic acid, dioctadecyl dimethyl ammonium chloride, methyl stearate) by the Langmuir-Blodgett (LB) method. Still alternatively, also an alignment film capable of exhibiting alignment function upon being applied with electric field or magnetic field, and upon being irradiated by light, have been known. Among them, the alignment film formed by rubbing may be preferable in the present invention, from the viewpoint of readiness in controlling the pre-tilt angle of the alignment film, whereas the photo-aligned film formed by irradiation of light may be preferable, from the viewpoint of good uniformity in alignment.

Rubbed Alignment Film

Polymer materials adoptable to the alignment film formed by rubbing have been described in a number of literatures, and may commercially be available a lot. Poly(vinyl alcohol) or polyimide, and derivatives of them may preferably be applicable to the alignment film of the present invention. Details of the alignment film may be referred to the description from line 24, page 43 to line 8, page 49 of WO01/88574A1.

The thickness of the alignment film is preferably 0.01 to 10 μm, and more preferably 0.01 to 1 μm.

The rubbing may generally be provided by rubbing the surface of the polymer layer with paper or cloth several times in a fixed direction. In particular in the present invention, it may preferably be provided by the method described in "Ekisho Binran (The Handbook of Liquid Crystal)" (published by Maruzen Co., Ltd., October 30, 2000).

Also a method of varying the density of rubbing adoptable herein may be found in the aforementioned "Ekisho Binran" (published by Maruzen Co., Ltd.). The density of rubbing (L) is quantified by the equation (A) below:

$$L=Nl(1+2\pi rn/60v) \quad \ldots Eq.(A)$$

In equation (A), N represents the number of times of rubbing, l represents the length of contact of a rubbing roller, r represents the diameter of the roller, n represents the number of rotation (rpm) of the roller, and v represents a travel speed of the stage (per second).

The density of rubbing may be increased by increasing the number of time of rubbing, increasing the length of contact of the rubbing roller, increasing the diameter of the roller, increasing the number of rotation of the roller or by decreasing the travel speed of the stage. On the other hand, the density of rubbing may be decreased by making these conditions vice versa.

The density of rubbing and the pre-tilt angle of the alignment film are correlated such that higher density of rubbing corresponds to smaller pre-tilt angle, and lower density of rubbing corresponds to larger pre-tilt angle.

Photo-Aligned Film

Photo-alignable materials adoptable to the alignment film formed by irradiation of light have been described in a number of literatures. Preferable examples of the materials for composing the alignment film of the present invention include azo compounds described in Japanese Laid-Open Patent Publication Nos. 2006-285197, 2007-76839, 2007-138138, 2007-94071, 2007-121721, 2007-140465, 2007-156439, 2007-133184, 2009-109831, and Japanese Patent Nos. 3883848, 4151746; aromatic ester compounds described in Japanese Laid-Open Patent Publication No. 2002-229039; maleimide and/or alkenyl-substituted nadimide compound having a photo-alignable unit, described in Japanese Laid-Open Patent Publication Nos. 2002-265541 and 2002-317013; photo-crosslinkable silane derivatives described in Japanese Patent Nos. 4205195 and 4205198; and photo-crosslinkable polyimide, polyamide or ester described in Published Japanese Translation of PCT International Publication for Patent Publication Nos. 2003-520878, 2004-529220, and Japanese Patent No. 4162850. Among them, the azo compound, and photo-crosslinkable polyimide, polyamide or ester are preferable.

The photo-alignable film made of the above-described material is then irradiated by linear polarized light or non-polarized light, to thereby manufacture the photo-aligned film.

In this patent specification, the term of "irradiation of linear polarized light" means an operation for inducing

photo-reaction in the photo-alignable material. The wavelength of light adoptable herein may vary depending on the photo-alignable material to be used, and is not specifically limited so far as the wavelength is necessary for the photo-reaction. Light used for the irradiation of light preferably has a peak wavelength of 200 nm to 700 nm, and is more preferably ultraviolet radiation having a peak wavelength of 400 nm or shorter.

Light sources generally used for the irradiation of light may be exemplified by those generally adopted, which include lamps such as tungsten lamp, halogen lamp, xenon lamp, xenon flash lamp, mercury lamp, mercury xenon lamp, and carbon arc lamp; various types of laser (for example, semiconductor laser, helium-neon laser, argon ion laser, helium cadmium laser, YAG laser); light emitting diode; cathode ray tube and so forth.

Methods of obtaining linear polarized light adoptable herein may be exemplified by those using polarizing plate (for example, iodine-containing polarizing plate, dichroic dye-containing polarizing plate, wire grid-type polarizing plate); prism element (for example, Glan-Thompson prism); reflective polarizer allowing incidence at the Brewster's angle; or light emitted from polarized laser light source.

Alternatively, light having only necessary wavelength may selectively be irradiated, using a filter, wavelength conversion element or the like.

For the case where linear polarized light is used, a method of irradiation adoptable herein is such as irradiating the light from the top surface or back surface of the alignment film, in the direction normal or oblique thereto. While the angle of incidence of the light may vary depending on the photo-alignable materials, it may be adjustable within the range from 0˚ to 90˚ (normal), and preferably from 40˚ to 90˚.

For the case where non-polarized light is used, the light is irradiated in oblique directions, where the angle of incidence may be adjustable within the range from 10˚ to 80˚, preferably from 20˚ to 60˚, and particularly preferably from 30˚ to 50˚.

Irradiation time is preferably 1 minute to 60 minutes, and more preferably 1 minute to 10 minutes.

If the polarizing film is necessarily patterned, methods adoptable thereto may be such as irradiating light through a photomask, repeated by number of times necessary for the patterning, and such as drawing a pattern by laser beam scanning.

Alternatively, the internal polarizing layer may be formed by using a transfer material. More specifically, a polarizing layer is formed on a temporary support by the method described in the above, and then the polarizing layer may be transferred onto the surface of the liquid crystal cell substrate.

Next, the components other than the internal polarizing layer will be explained.

[External Polarizing layer]

Generally utilized polarizer may preferably be adoptable to the first and second external polarizing layers used for the liquid crystal display device of the present invention. An exemplary product adoptable herein is an iodine-containing polarizing plate or a dye-containing polarizing film, composed of a polymer matrix such as poly(vinyl alcohol) matrix stretched after being immersed into an iodine solution or dichroic dye solution, and protective films made of TAC, cycloolefin polymer, acrylic resin, polypropylene or the like bonded to both surfaces thereof. Also $Ta_2O_5/SiO_2$ photonic crystal, a crystal film produced by the auto-cloning technique, and so forth may be adoptable.

Besides them, a linear or circular polarizer making use of a polymerizable cholesteric liquid crystal described in Japanese Laid-Open Patent Publication No. 2000-352611; guest-host-type linear polarizers making use of uniaxially-aligned liquid crystals and containing dichroic dyes, described in Japanese Laid-Open Patent Publication Nos. H011-101964, 2006-161051 and 2007-199237, Published Japanese Translation of PCT International Publication for Patent Publication Nos. 2002-527786, 2006-525382, 2007-536415 and 2008-547062, and Japanese Patent No. 3335173; a wire grid polarizer making use of a metal grid typically composed of aluminum, described in Japanese Laid-Open Patent Publication No. S55-95981; an inorganic visible-light-reflective polarizer described in Published Japanese Translation of PCT International Publication for Patent Publication No. 2002-510062; a polarizer composed of a polymer compound of liquid-crystalline compound, having carbon nanotubes diffused or aligned therein, described in Japanese Laid-Open Patent Publication No. 2002-365427; a polarizer composed of a polymer compound having metal particles diffused or aligned therein, described in Japanese Laid-Open Patent Publication No. 2006-184624; polyvinylene-type linear polarizers described in Japanese Laid-Open Patent Publication No. H011-248937, Published Japanese Translation of PCT International Publication for Patent Publication Nos. H10-508123, 2005-522726, 2005-522727 and 2006-522365; polarizers composed of lyotropic liquid-crystalline dyes represented typically by $(chromogen)(SO_3M)_n$, described in Japanese Laid-Open Patent Publication Nos. H07-261024, H08-286029, 2002-180052, 2002-90526, 2002-357720, 2005-154746, 2006-47966, 2006-48078, 2006-98927, 2006-193722, 2006-206878, 2006-215396, 2006-225671, 2006-328157, 2007-126628, 2007-133184, 2007-145995, 2007-186428, 2007-199333, 2007-291246, 2007-302807, 2008-9417, Published Japanese Translation of PCT International Publication for Patent Publication Nos. 2002-515075, 2006-518871, 2006-508034, 2006-531636, 2006-526013 and 2007-512236; and polarizers composed of dichroic dyes, described in Japanese Laid-Open Patent Publication Nos. H08-278409 and H011-305036. While the cholesteric liquids

crystal generally has a function of circular polarization splitting, it may be given as a linear polarizer, if combined with a λ/4 plate. The λ/4 plate is preferably composed of a composition containing at least one species of liquid-crystalline compound, and preferably composed of a layer formed by bringing a composition, which contains at least one species of liquid-crystalline compound having a polymerizable group, into a liquid crystal phase, and by curing the composition by heating and/or ultraviolet irradiation.

Among them, in particular the iodine-containing polarizing film, the dye-containing polarizing film, the polarizing film composed of dichroic dye, and the wire grid-type polarizer may preferably be used, from the viewpoint of the degree of polarization.

[Liquid Crystal Cell Substrate]

Substrates adoptable herein may be exemplified by those composed of no-alkali glass, soda glass, Pyrex (registered trademark) glass, quartz glass typically used for liquid crystal display devices; those used for photo-electric conversion devices such as solid imaging devices; silicon substrate; plastic substrate; and the above-described substrates additionally having functional layers, such as transparent electro-conductive film, color filter film, electrode, TFT and so forth, formed thereon. These substrates may have a black matrix for partitioning the individual pixels, or a transparent resin layer for improving adhesiveness, provided thereon. The plastic substrate preferably has a gas barrier layer and/or solvent -resistant layer formed on the surface thereof.

Alternatively, also the substrate having so-called COA structure, described in the above, may be adoptable, wherein the internal polarizing layer may be disposed over the COA structure.

The light transmittance value of the substrate adoptable to the present invention is preferably 80% or larger. The plastic substrate may preferably be composed of an optically isotropic polymer film. Specific examples of the polymer and Preferable embodiments adoptable herein may be those described in paragraph [0013] of Japanese Laid-Open Patent Publication No. 2002-22942. Even polymers such as polycarbonate and polysulfon, known to be likely to express birefringence, may be adoptable, after being modified with the molecules described in WO00/26705 so as to reduce the expressivity.

[Driven liquid crystal layer]

Operational mode of the liquid crystal display device of the present invention is not specifically limited, allowing adoption of whatever modes of VA, IPS, TN, OCB, HAN, ECB, STN, DSTN and PSA; and modes using vertically-aligned, in-plane electric field switching liquid crystal, ferroelectric liquid crystal, anti-ferromagnetic liquid crystal, and blue-phase liquid crystal; multi-domain liquid crystal using any of these liquid crystals (for example, MVA and PVA); and ASV. The driven liquid crystal layer may be adoptable also to liquid crystal display devices based on operational modes other than those described in the above. Targets of adoption may be the transmission-type liquid crystal display devices illustrated in FIG. 1 and FIG. 3, reflection-type liquid crystal display devices, or semi-transparent-type liquid crystal display devices illustrated in FIG. 4. The liquid crystal display devices of these sorts may be exemplified by those described in "Ekisho Hyoji Sochi Kosei Zairyo no Saishin Gijutsu (Latest Technologies of Materials for Composing Liquid Crystal Display Devices)", edited by Yasufumi Iimura, published by CMC Publishing Co., Ltd., Chapter 1.

The liquid crystal materials to be driven, preferably adoptable to the present invention, may be those used for general liquid crystal display devices having operational modes ot VA, IPS, TN, OCB, HAN, ECB, STN, DSTN and PSA; vertically-aligned, in-plane electric field switching liquid crystal; ferroelectric liquid crystal; anti-ferromagnetic liquid crystal; and blue-phase liquid crystal. The liquid crystal materials may be exemplified by those described in "Ekisho Hyoji Sochi Kosei Zairyo no Saishin Gijutsu (Latest Technologies of Materials for Composing Liquid Crystal Display Devices)", edited by Yasufumi Iimura, published by CMC Publishing Co., Ltd., Chapter 3.

[Pixel Electrode Layer]

The pixel electrode layer adoptable to the liquid crystal display device of the present invention is not specifically limited. In general, the pixel electrodes are provided so as to apply voltage to each thin film transistor (TFT) provided to each pixel of the liquid crystal display device. Each TFT and the pixel electrodes are electrically connected through contact holes.

TFT preferably adoptable herein may be exemplified by α-Si TFT, LTPS-TFT, II-VI compound semiconductor TFT, μc-Si TFT, HTPS-TFT, oxide semiconductor TFT, ZnO TFT, In-Ga-Zn-O TFT, organic semiconductor TFT and so forth. Also TFT described in "Hakumaku Toranjisuta Gijutsu no Subete - Kozo, Tokusei, Seizo Purosesu kara Jisedai TFT made (All about Thin Film Transistor Technologies - From Structure, Characteristic, Manufacturing Process to Next-Generation TFT)", written by Yasuhiro Ukai, may preferably be adoptable.

[Transparent Electrode Layer]

The transparent electrode layer may be formed using ITO by sputtering. Besides ITO, also ZnO-base transparent electro-conductive film, $In_2O_3$-ZnO-base transparent electro-conductive film, Ga-added ZnO (GZO) film, silver-added ITO film, p-type oxide transparent electro-conductive film, $GuAlO_2$ delafossite film, $SrCu_2O_2$ film, $In_4Sn_3O_{12}$ transparent electro-conductive film, $InGaZnO_4$ transparent electro-conductor, TiN film, silver nanowire film, and so forth may be adoptable. For example, also the materials described in "Ekisho Hyoji Sochi Kosei Zairyo no Saishin Gijutsu (Latest Technologies of Materials for Composing Liquid Crystal Display Devices)", edited by Yasufumi Iimura, published by CMC Publishing Co., Ltd., Chapter 3; those described in "Tomei Dodenmaku (Transparent Electro-Conductive Film)", edited by Yutaka Sawada, published by CMC Publishing Co., Ltd.; those described in "Tomei Dodenmaku no Gijutsu (Technologies of Transparent Electro-Conductive Film)", complied by the 166th Committee for Transparent Oxide Optoelectronic Materials in Japan Society for the Promotion of Science, may be preferable.

[Planarizing Layer (Transparent Resin Cured Layer)]

A planarizing layer may be disposed over the surfaces of the color filter layer and the TFT, if the surfaces have irregularity. The planarizing layer may be disposed over the surfaces of the polarizing film and so forth, so as to give physical strength, durability, or optical characteristics. The thickness of the transparent resin cured layer preferably falls in the range from 1 to 30 $\mu$m, and particularly preferably from 1 to 10 $\mu$m.

The transparent resin cured layer is preferably formed based on crosslinking reaction or polymerization reaction of an ionized radiation-curable (preferably ultraviolet-curable) compound. The transparent resin cured layer in the present invention may be formed by coating a coating composition, which contains an ionized radiation-curable, multi-functional monomer or multi-functional oligomer, onto the surface of the polarizer, and by allowing the multi-functional monomer or the multi-functional oligomer to proceed cross-linking reaction or polymerization reaction.

[Color Filter Layer]

The color filter layer applicable to the liquid crystal display device of the present invention is not specifically limited. The color filter layer is generally configured to have red, green and blue dot-patterned pixels disposed on a substrate in a matrix arrangement, and partitioning them at the boundary using a dark-colored partition wall such as black matrix. Both types of the color filter layer, making use of pigment or dye as the colorant thereof, may preferably be adoptable. Preferable examples of the pigment and dye are described in Japanese Laid-Open Patent Publication No. 2009-139616. The pigment preferably has a small mean primary particle size. Also inorganic pigments such as iron oxide and complex oxide may be preferable as the pigment. Preferable materials for composing the black matrix adoptable herein include graphite, carbon black, titanium black, chromium and so forth. Preferable examples of method of manufacturing the color filter include dyeing, printing, colored resist patterning, transfer process, ink jet process, and so forth.

[Combined Use with Retardation Film]

The liquid crystal display device of the present invention may have a retardation layer, disposed between the liquid crystal cell and the external polarizing layer, or disposed in the liquid crystal cell. The retardation layer is used for the purpose of compensating retardation induced by the liquid crystal cell, angular dependence of the polarizing plate, and so forth. Examples of the retardation film, which can be used as the retardation layer in the present invention, may be exemplified by those composed of stretched film of various polymers, and those obtained by coating and succeeding fixation of alignment of polymerizable liquid crystal. Whichever film of A-plate, C-plate, biaxial film, films containing disk-like or rod-like molecules in hybrid alignment, categorized by the direction of expression of retardation, may preferably be adoptable. Also the retardation film having an additional function of the external polarizing layer, and in-cell retardation film formed in the liquid crystal cell may preferably be used. Examples of the retardation film of these sorts are described in "Ekisho Hyoji Sochi Kosei Zairyo no Saishin Gijutsu (Latest Technologies of Materials for Composing Liquid Crystal Display Devices)", edited by Yasufumi Iimura, published by CMC Publishing Co., Ltd., Chapter 3, for example.

[Back Light Unit]

The back light unit applicable to the liquid crystal display device of the present invention may be configured by a reflective sheet, a light source, a light guide plate, a diffuser plate, a light condensing plate and so forth, and any of those generally used for the liquid crystal display devices may preferably be adoptable, without special modification. The light source may be exemplified by cold cathode ray fluorescent lamp, xenon fluorescent lamp, LED, organic EL and so forth. The light condensing plate may be exemplified by prism array sheet, lens array sheet, dotted sheet,

luminance enhancing film and so forth. Also a reflective polarization splitting sheet designed to give anisotropy in the reflectivity as a result of stacking of a plurality of films having different anisotropy of refractive indices; film having cholesteric liquid crystal polymer aligned therein; and circular polarization splitting sheet obtained by allowing a film base to support thereon the thus-aligned liquid crystal layer; may preferably be used.

Numerous examples of components composing the back light unit are described, for example, in "Ekisho Hyoji Sochi Kosei Zairyo no Saishin Gijutsu (Latest Technologies of Materials for Composing Liquid Crystal Display Devices)", edited by Yasufumi Iimura, published by CMC Publishing Co., Ltd., Chapter 3; and "Ekisho Hyoji Sochi-yo Bakku Raito Gijutsu (Back Light Technology For Liquid Crystal Display Device)", edited by Kalantar Kalil, published by CMC Publishing Co., Ltd., any of which may preferably be adoptable.

[Anti-Reflection Film/Protection Film]

The liquid crystal display device of the present invention may have an anti-reflection film on the screen side. Anti-reflection film of whichever type of AR (anti-reflection) type having a surface reflectivity of 0 to 0.5% or around, and LR (low reflection) type having a surface reflectivity of 0.5 to 4% or around, may be adoptable, so far as they are generally used for liquid crystal display devices and plasma display devices. Anti-reflection film of whichever type of AG (anti-glare)-finished type, given with anti-glare performance by dispersing particles in the film or by providing surface irregularity, and clear-finished type, having a smooth surface and thereby ensuring high contrast and good visibility, but not having anti-glare performance, may preferably be adoptable.

[Applications]

Applications of the liquid crystal display device of the present invention will be explained.

The liquid crystal display device of the present invention is suitable for large-sized television set. The large-sized television set is favored for the purpose of viewing cinema and so forth, and is required to have a higher denseness of the black state as compared with ordinary-sized television set. In addition, due to its largeness of area, also a light source used therefor tends to increase in size and power consumption, so that it is important from the viewpoint of energy saving to ensure a high transmittance value in the white state to thereby keep a high level of efficiency of use of light.

Since the ordinary polarizing film manufactured by stretching poly(vinyl alcohol) film is dimensionally limited by the size of stretching machine, so that a coating-type polarizing layer, which is less affected by the dimensional limit of machine, may be adoptable as the external polarizing layer for the large-sized television set, similarly to the internal polarizing layer.

The liquid crystal display device of the present invention is preferable also for digital signage. The digital signage is a system for providing the users with advertising information and so forth, in a displayed form on display devices installed at public places, in shops, and so forth. Since the system is used in a distant view, it is important for the system to ensure a high contrast for a good visibility. Since the system may be used outdoors, it is also important for the system to be bright. If the transmittance value in the white state is low, it may correspondingly be necessary to increase brightness of the back light, and may result in problem of power consumption. The liquid crystal display device of the present invention is less likely to cause such problem, proving its usefulness in this application.

The liquid crystal display device of the present invention is preferably applicable also to television sets using LED back light or organic EL back light. Alternatively, it may preferably be applicable also as a liquid crystal panel for projector. Still alternatively, the present invention is suitable also for high-definition liquid crystal display devices conforming to full high definition or 4K2K format.

Alternatively, it is efficient to combine the liquid crystal display device of the present invention with four or more colors of color filters aimed at improved color reproducibility, or with a light source.

Still alternatively, it is also efficient to apply the liquid crystal display device of the present invention to digital camera, car navigation system, mobile phone, PDA and so forth.

The polarizing film of the present invention may be applicable to a luminance improving film, in a combined form with a $\lambda/4$ layer. The polarizing film may be applicable to whatever applications so far as the polarizing plate may be adoptable thereto. For example, the polarizing film may be applicable also to patterned circular polarizing plate for 3D liquid crystal display device and head-mounting display device, in a combined form with a patterned $\lambda/4$ layer. Alternatively, it may be applicable also to a semi-transparent liquid crystal display device described by T. Ohyama et al. in SID'04 Digest of Technical Papers, pp.1106-1109 (2004). The polarizing film may be adoptable as an internal polarizing layer on the reflective portion side, and also the external polarizing layer may be a polarizing layer formed by coating similarly to the internal polarizing layer. It may also be suitable for dual-view and triple-view liquid crystal display devices.

The polarizing film of the present invention may be adoptable as a polarizing plate for ellipsometry, or as a polarized light receiving element combined with an image sensor. It may also be adoptable to a pick-up unit for optical

disk, or a polarizing plate for optical communication. It may still also be suitable for anti-reflection applications, if combined with a λ/4 retardation layer. The anti-reflective applications include prevention of reflection on the electrodes of the liquid crystal display device and organic EL device.

The polarizing film of the present invention may be adoptable also to a polarization lens for auto-focus camera, if combined with a λ/4 retardation layer. A pair of polarizing sunglasses may also be a preferable application. It may still alternatively be applicable, in a combined form with a λ/4 retardation layer, to a substitute of the black matrix in the color filter of the liquid crystal cell and various types of display devices.

## EXAMPLES

The present invention will be explained to further detail, referring to Examples. Note that the materials, reagents, amounts and ratios of substances, operations and so forth explained in Examples below may appropriately be modified without departing from the spirit of the present invention. The scope of the present invention is, therefore, not limited to the specific examples described below.

### 1. Example 1

#### (1) Formation of External Polarizing layer

An iodine-containing polarizing plate was bonded to one surface of a glass plate (liquid crystal cell substrate), while placing an adhesive film in between, to thereby form an external polarizing layer. The degree of polarization of the external polarizing layer, measured by the method described later, was found to be 0.99978, which was nearly equivalent to the degree of polarization of the polarizing plate generally used for the liquid crystal display device.

#### (2) Formation of Color Filter Layer

Color resist CG-9500L from FUJIFILM Electronic Materials, Co., Ltd. was coated on the surface of the glass substrate opposite to the surface having the external polarizing layer previously formed thereon, by spin coating at 500 rpm for 20 seconds. The coated film was dried at 80˚C for 5 minutes, and then annealed in an oven at 230˚C for one hour. The color filter layer was thus formed. The depolarization index of the color filter layer, measured by the method described later, was found to be $2.1 \times 10^{-4}$, which was nearly equivalent to the depolarization index of the color filter generally used for the liquid crystal display device.

#### (3) Formation of Internal Polarizing layer

A 4% aqueous solution of poly(vinyl alcohol) "PVA103" from Kuraray Co., Ltd. was coated on the color filter layer on the glass substrate, using a #12 bar, and the coated solution was dried 80˚C for 5 minutes. The resultant film was then rubbed according to the conditions listed in Table below.

Each of the coating liquids having compositions listed in Table below was coated on the rubbed surface according to the conditions for coating listed again in Table below. The individual coated liquids were then aged at 70˚C for 30 seconds, to thereby form internal polarizing layers having various characteristics.

Table 1

| Internal polarizing layer No. | Composition of coating liquid | Conditions of rubbing | Conditions of coating |
|---|---|---|---|
| 1 (Example) | Azo dye A-46: 0.5% (Cr 158˚C N 240˚C I) Solvent : chloroform | Reciprocating rubbing 3 times at 400 rpm | Spin coating 1500 rpm, 30 sec. |
| 2 (Example) | Azo dye A-46: 0.5% (Cr 158˚C N 240˚C I) Solvent: chloroform | Reciprocating rubbing 3 times at 400 rpm | Spin coating 2000 rpm, 30 sec. |
| 3 (Example) | Azo dye A-46: 0.45% (Cr 158˚C N 240˚C I) Azo dye C-9: 0.30% (Cr 167˚C N 294˚C I) Solvent: chloroform | Reciprocating rubbing 3 times at 400 rpm | Spin coating 1500 rpm, 30 sec. |

| | | | |
|---|---|---|---|
| 4 (Example) | Azo dye B-18: 0.25% (Cr 237°C N 24D°C I) Azo dye D-1: 0.25% (Cr 200°C N 237°C I) Solvent chloroform | Reciprocating rubbing 3 times at 400 rpm | Spin coating 1200 rpm, 30 sec. |
| 5 (Comparative Example) | Azo dye A-46: 1.0% (Cr 158°C N 240°C I) Solvent: chloroform | Reciprocating rubbing 3 times at 1200 rpm | Spin coating 1000 rpm, 30 sec. |
| 6 (Comparative Example) | Azo dye A-46: 1.0% (Cr 158°C N 240°C I) Solvent: chloroform | Reciprocating rubbing once at 400 rpm | Spin coating 1000 rpm, 30 sec. |
| 7 (Comparative Example) | Azo dye A-46: 3.0% (Cr 158°C N 240°C I) Solvent: chloroform | Reciprocating rubbing once at 400 rpm | Spin coating 1000 rpm, 30 sec. |

[Evaluation of Optical Characteristics]

A commercially-available liquid crystal television set was decomposed, and a back light module was taken out so as to be used as a light source. A luminance meter BM-5 from TOPCON Corporation was disposed 70 cm away from the light source in the perpendicular direction, so as to enable measurement of brightness in a viewing angle of 1°.

The degree of polarization of the external polarizing layer was measured as described below. An external polarizing layer 1 and an external polarizing layer 2 were stacked in this order in close contact with each other, on the light source in close contact therewith. The brightness was measured for both cases where the relative azimuth of the transmission axes of the external polarizing layer 1 and the external polarizing layer 2 was adjusted to 0° which represents parallel arrangement, and adjusted to 90° which represents cross-Nicol arrangement. The degree of polarization P was calculated from the equation below:

$$\text{Cont}=\frac{\text{brightness under parallel arrangement}}{\text{brightness under cross-Nicol arrangement}}$$

$$P=\sqrt{\frac{Cont-1}{Cont+1}}$$

The depolarization index of the color filter layer was measured as described below. The polarizing layer 1 for measuring, the color filter layer, and the polarizing layer 2 for measuring were stacked in this order in close contact with each other, on the light source in close contact therewith. The brightness was measured for both cases where the relative azimuth of the transmission axes of the polarizing layer 1 for measuring and the polarizing layer 2 for measuring was adjusted to 0° which represents parallel arrangement, and adjusted to 90° which represents cross-Nicol arrangement. The depolarization index $DI_{CF}$ was calculated from the equation below, where P represents the degree of polarization of the polarizing layer for measuring.

$$\text{Cont}=\frac{\text{brightness under parallel arrangement}}{\text{brightness under cross-Nicol}}$$

$$DI_{CF} = 1 - \frac{1}{P^2}\frac{Cont - 1}{Cont + 1}$$

The degree of polarization P' of the internal polarizing layer was measured in a similar manner as the measurement of the degree of polarization of the external polarizing layer.

The depolarization index DI' of the internal polarizing layer was measured as described below.

The polarizing layer 1 for measuring, the internal polarizing layer, and the polarizing layer 2 for measuring were stacked in this order in close contact with each other, on the light source in close contact therewith. The brightness was measured for both cases where the relative azimuth of the transmission axes of the internal polarizing layer and the polarizing layer 2 for measuring, with respect to the polarizing layer 1 for measuring, was adjusted to 0° which represents parallel arrangement, and adjusted to 90° which represents cross-Nicol arrangement. The depolarization index DI' was calculated from the equation below, where P represents the degree of polarization of the polarizing layers for measuring, and P' represents the degree of polarization of the internal polarizing layer.

$$X = \frac{\text{brightness under parallel arrangement}}{\text{brightness under cross-Nicol arrangement}}$$

$$DI' = \frac{1 + 2PP' + P^2 + X\left(P^2 - 1\right)}{P^2\left(1 + X\right)}$$

The single-layer transmittance value T' of the internal polarizing layer was measured as described below. The internal polarizing layer was disposed in close contact with the light source. The brightness was measured in the presence and absence of the internal polarizing layer, and the single-layer transmittance value T' was calculated from the equation below:

$$T' = \frac{\text{brightness in the presence of internal polarizing layer}}{\text{brightness in the absence of internal polarizing layer}}$$

The contrast of the liquid crystal display device was measured as described below. The polarizing layer 1 for measuring, the color filter layer, the internal polarizing layer, and the polarizing layer 2 for measuring were stacked in this order in close contact with each other, on the light source in close contact therewith. The brightness was measured for both cases where the relative azimuth of the transmission axes of the internal polarizing layer and the polarizing layer 2 for measuring, with respect to the polarizing layer 1 for measuring, was adjusted to 0° which represents parallel arrangement, and adjusted to 90° which represents cross-Nicol arrangement. The contrast was calculated from the equation below:

$$Cont = \frac{\text{brightness under parallel arrangement}}{\text{brightness under cross-Nicol arrangement}}$$

Rate of decrease in the white transmittance value of the liquid crystal display device caused by incorporation

of the internal polarizing layer was measured as described below. The external polarizing layer 1, the color filter layer, the internal polarizing layer, and the external polarizing layer 2 were stacked in this order in close contact with each other, on the light source in close contact therewith. The brightness was measured for the case where the relative azimuth of the transmission axes of the internal polarizing layer and the external polarizing layer 2, with respect to the external polarizing layer 1, was adjusted to 0° which represents parallel arrangement, to thereby determine white brightness in the presence of the internal polarizing layer. On the other hand, the brightness was measured also for the case where the internal polarizing layer, was removed from the above-described configuration, to thereby determine white brightness in the absence of the internal polarizing layer. Rate of decrease in the white transmittance value of the liquid crystal display device caused by incorporation of the internal polarizing layer was measured as described below. Smaller value of the rate of decrease calculated from the equation below desirably means smaller effect of decrease in the white brightness due to internal polarizing layer.

$$\text{Rate of decrease} = 100\times\left(1-\frac{\text{white brightness in the presence of internal polarizing layer}}{\text{white brightness in the absence of internal polarizing layer}}\right)$$

Each of the individual samples configured as listed below was measured, and the rate of decrease was calculated.

Table 2

| Sample No. | Internal polarizing layer | | | | DI'/P' | Contrast | Rate of decrease |
|---|---|---|---|---|---|---|---|
| | No. | P' | DI' | T'(%) | | | |
| 1 (Comparative Example) | - | - | - | - | - | 5160 | 0% |
| 2 | 1 | 0.85 | $2.35\times10^{-4}$ | 55 | $2.71\times10^{-4}$ | 6490 | 6.4% |
| 3 | 2 | 0.75 | $1.39\times10^{-4}$ | 60 | $1.87\times10^{-4}$ | 7210 | 4.8% |
| 4 | 3 | 0.96 | $3.66\times10^{-4}$ | 45 | $3.81\times10^{-4}$ | 5610 | 13% |
| 5 | 4 | 0.55 | $2.07\times10^{-4}$ | 54 | $3.76\times10^{-4}$ | 5500 | 16% |

The order of stacking was given as external polarizing layer/color filter layer/internal polarizing layer/liquid crystal layer/external polarizing layer, for all samples except sample 1 (Comparative Example).

It may be understood from the results described in the above that, in the liquid crystal display device produced by combining the external polarizing layer having a general degree of polarization and the color filter layer having a general polarization index, with the internal polarizing layer, the contrast may be improved while the rate of decrease in the white brightness due to incorporation of the internal polarizing layer is not greater than 30% or around, by adopting the polarizing film of the present invention having DI'/P' of $4.3\times10^{-4}$ or smaller as the internal polarizing layer.

Next, various samples having different relations between DI'/P' of the internal polarizing layer, and $D_{1CF}/P_{1CF}$ of the combination of the color filter layer and the external polarizing layer, were produced, and the contrast and the rate of decrease in the white transmittance value were examined in a similar manner. Results are shown in Table below.

Table 3

| Sample No. | Internal polarizing layer | | | | DI'/P' | $D_{1CF}/P_{1CF}$ | Contrast | Rate of decrease |
|---|---|---|---|---|---|---|---|---|
| | No. | P' | DI' | T(%) | | | | |
| 1 (Comparative Example) | - | | | | - | $4.44\times10^{-4}$ | 5160 | 0% |
| 2 | 1 | 0.85 | $2.35\times10^{-4}$ | 50 | $2.71\times10^{-4}$ | $4.44\times10^{-4}$ | 6490 | 6.4% |

| | | | | | | | | |
|---|---|---|---|---|---|---|---|---|
| 3 | 2 | 0.75 | $1.39\times10^{-4}$ | 55 | $1.87\times10^{-4}$ | $4.44\times10^{-4}$ | 7210 | 4.8% |
| 4 | 3 | 0.96 | $3.66\times10^{-4}$ | 42 | $3.81\times10^{-4}$ | $4.44\times10^{-4}$ | 5610 | 13% |
| 5 | 4 | 0.55 | $2.07\times10^{-4}$ | 49 | $3.76\times10^{-4}$ | $4.44\times10^{-4}$ | 5500 | 16% |
| 6 | 5 | 0.991 | $9.57\times10^{-3}$ | 36 | $9.66\times10^{-3}$ | $4.44\times10^{-4}$ | 400 | 21% |
| 7 | 6 | 0.990 | $9.82\times10^{-4}$ | 38 | $9.92\times10^{-4}$ | $4.44\times10^{-4}$ | 3030 | 18% |
| 8 | 7 | 0.997 | $4.41\times10^{-4}$ | 29 | $4.43\times10^{-4}$ | $4.44\times10^{-4}$ | 5170 | 36% |

The order of stacking was given as external polarizing layer/color filter layer/internal polarizing layer/liquid crystal layer/external polarizing layer, for all samples except sample 1 (Comparative Example).

It may be understood from the results described in the above that the contrast may distinctively be improved if the relation of $DI'/P' < D_{1CF}/P_{1CF}$ is satisfied.

It may also be understood that the effect of decreasing the white transmittance value due to incorporation of the internal polarizing layer may be suppressed, if the internal polarizing layer has a transmittance value of 30% or larger.

2. Example 2 (Evaluation of VA Mode Liquid Crystal Display Device)

(1) Production of VA Mode Liquid Crystal Display Device C1 of Comparative Example

A glass substrate of 0.7 mm thick, having a silicon nitride layer which functions as a passivation film preliminarily formed thereon, was obtained, and interconnects such as scanning lines and signal lines, and thin film transistors which function as switching elements were formed on the silicon nitride layer, by repetitive formation and patterning of films, similarly to the general processes of forming film transistors. A ultraviolet-curable transparent resist was then coated thereon, and allowed to cure under ultraviolet irradiation, to thereby form an insulating layer while leaving the throughholes unfilled.

Next, an ITO film of 200 nm thick was stacked thereon by sputtering, and then etched to form a pixel electrode layer. Over the electrode layer, zigzag-patterned stripes (with a height of 1.5 μm, and a width of the bottom of 10 μm) were formed using a ultraviolet-curable transparent negative resist by a photolithographic process, so as to give projections for alignment control. On the thus-obtained projections for alignment control, projections of 2 μm high, used later as spacers, were formed using a ultraviolet-curable transparent negative resist, by a photolithographic process in a similar manner as described in the above. On the substrate having thereon the thus-formed spacers, a vertical alignment film of 70 nm thick was formed by coating JALS-688 (from JSR Corporation) by spin coating, and annealed at 200˚C for one hour, to thereby manufacture a TFT substrate.

Another glass substrate of 0.7 mm thick was obtained, and a photolithographic process was repeated thereon, typically by coating an ultraviolet-curable colored resist, setting a photomask having a predetermined light interception pattern, irradiating ultraviolet radiation so as to cure a predetermined portion of the resist, and removing the uncured portion by development. In this way, color filter layers colored in blue, green and red, partitioned by a black matrix, were formed.

Thereafter, an ITO film was deposited thereon by sputtering, and the film is then etched to thereby form a transparent electrode having 10-μm-wide slits which allow the glass substrate to expose therein. The substrate with the transparent electrode was thus manufactured. A vertical alignment film of 70 nm thick was then formed thereon, by coating JALS-688 (from JSR Corporation) by spin coating, and by annealing the coated film at 200˚C for one hour. The opposing substrate was obtained in this way.

A liquid crystal cell was then configured by using the thus-manufactured opposing substrate and the previously-manufactured TFT substrate, and a liquid crystal layer was formed therebetween by dropping, or injecting, a liquid crystal material ("MLC6608", from MERCK) having a negative dielectric anisotropy. The liquid crystal cell was then annealed at 110˚C for one hour so as to cancel the effect of flow-induced alignment, and then bonded with polarizing plates respectively on both surfaces thereof. A VA-mode liquid crystal display device (liquid crystal display device C1) was thus obtained.

(2) Production of VA Mode Liquid Crystal Display Device C2 for Comparative Example

A glass substrate of 0.7 mm thick, having a silicon nitride layer which functions as a passivation film preliminarily formed thereon, was obtained, and interconnects such as scanning lines and signal lines, and thin film transistors which function as switching elements were formed on the silicon nitride layer, by repetitive formation and patterning of films, similarly to the general processes of forming film transistors. Next, on the surface of the substrate having the thin film

transistors formed thereon, a photolithographic process was repeated typically by coating a ultraviolet-curable colored resist, setting a photomask having a predetermined light interception pattern, irradiating ultraviolet radiation so as to cure a predetermined portion of the resist, and removing the uncured portion by development. In this way, color filter layer colored in blue, green and red, partitioned by a black matrix, was formed.

Next, an ITO film of 200 nm thick was stacked thereon by sputtering, and then etched to form a pixel electrode layer. Over the transparent electrode layer, zigzag-patterned stripes (with a height of 1.5 μm, and a width of the bottom of 10 μm) were formed using a ultraviolet-curable transparent negative resist by a photolithographic process, so as to give projections for alignment control. On the thus-obtained projections for alignment control, projections of 2 μm high, used later as spacers, were formed using a ultraviolet-curable transparent negative resist, by a photolithographic process in a similar manner as described in the above. On the substrate having thereon the thus-formed spacers, a vertical alignment film of 70 nm thick was formed by coating JALS-688 (from JSR Corporation) by spin coating, and annealed at 200˚C for one hour, to thereby manufacture a COA substrate.

Another glass substrate of 0.7 mm thick was obtained, an ITO film was deposited thereon by sputtering, and the film is then etched to thereby form a transparent electrode having 10-μm-wide slits allowing the glass substrate to expose therein. The substrate with the transparent electrode was thus manufactured. A vertical alignment film of 70 nm thick was then formed thereon, by coating JALS-688 (from JSR Corporation) by spin coating, and by annealing the coated film at 200˚C for one hour. The opposing substrate was obtained in this way.

A liquid crystal cell was then configured by using the thus-manufactured opposing substrate and the previously-manufactured COA substrate, and a liquid crystal layer was formed therebetween by dropping, or injecting, a liquid crystal material ("MLC6608", from MERCK) having a negative dielectric anisotropy. The liquid crystal cell was then annealed at 110˚C for one hour so as to cancel the effect of flow-induced alignment, and then bonded with polarizing plates respectively on both surfaces thereof. A VA-mode liquid crystal display device (liquid crystal display device C2) was thus obtained.

(3) Production of VA Mode Liquid Crystal Display Device 1 of Example

A VA-mode liquid crystal display device (liquid crystal display device 1) of Example of the present invention was manufactured similarly to the liquid crystal display device C1, except that an internal polarizing layer was formed by coating, using a slit coater according to the procedures bellow, so as to be provided between the color filter layer and the ITO layer of the opposing substrate used for manufacturing the liquid crystal display device C1 of Comparative Example.

(Preparation of Coating Liquid AL-1 for Forming Intermediate Layer/Alignment Film)

The composition below was prepared, and filtered through a 30-μm-pore polypropylene filter. The filtrate was used as coating liquid AL-1 for forming the intermediate layer/alignment film.

| Composition of Coating Liquid for Forming Intermediate Layer/Alignment Film (% by mass) | |
|---|---|
| Poly(vinyl alcohol) shown below | 3.21 |
| Poly(vinyl pyrrolidone) (Luvitec K30, from BASF) | 1.48 |
| Distilled water | 52.1 |

(continued)

| | |
|---|---|
| Methanol | 43.21 |

Poly(vinyl alcohol)

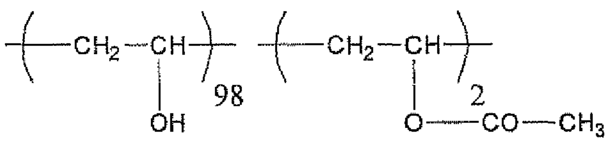

(Preparation of Coating Liquid POL-1 for Forming Polarizing film)

The composition below was prepared, and filtered through a 0.2-μm-pore polypropylene filter. The filtrate was used as coating liquid POL-1 for forming the polarizing film.

| Composition of Coating Liquid for Forming Polarizing film (% by mass) | |
|---|---|
| Surfactant: compound (I-6) shown below | 0.02 |
| Solvent: chloroform | 93.89 |
| Azo dye: (B-18) | 1.00 |
| (D-1) | 1.00 |
| Non-liquid-crystalline, multi-functional monomer: ethylene oxide-modified trimethylolpropane triacrylate (V#360, from Osaka Organic Chemical Industry, Ltd.) | 2.00 |
| Dipentaerythritol hexaacrylate (KAYARAD DPHA, from Nippon Kayaku Co., Ltd.) | 2.00 |
| Polymerization initiator: Irgacure 907(from CIBA Inc.) | 0.06 |
| Sensitizer: Kayacure DETX (from Nippon Kayaku Co., Ltd.) | 0.03 |

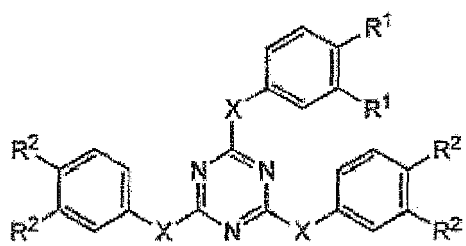

| Compound No. | $R^1$ | $R^2$ | X |
|---|---|---|---|
| I - 6 | $O(CH_2)_2O(CH_2)_2(CF_2)_6F$ | $O(CH_2)_2O(CH_2)_2(CF_2)_6F$ | NH |

(Preparation of Coating Liquid PP-1 for Forming Photo-Sensitive Resin Layer)

The composition below was prepared, and filtered through a 0.2-μm-pore polypropylene filter. The filtrate was used as coating liquid PP-1 for forming the photo-sensitive resin layer.

| Composition of Coating Liquid for Forming Photo-Sensitive Resin Layer (% by mass) | |
|---|---|
| Random copolymer having a molar ratio of benzyl methacrylate/methacrylic acid=72/28 (weight average molecular weight=37,000) | 5.0 |

(continued)

| Composition of Coating Liquid for Forming Photo-Sensitive Resin Layer (% by mass) | |
|---|---|
| Random copolymer having a molar ratio of benzyl methacrylate /methacrylic acid=78/22 (weight average molecular weight=40,000) | 2.45 |
| KAYARAD DPHA (from Nippon Kayaku Co., Ltd.) | 3.2 |
| Radical polymerization initiator (Irgacure 907, from CIBA Inc.) | 0.75 |
| Sensitizer (Kayacure DETX, from Nippon Kayaku Co., Ltd.) | 0.25 |
| Propylene glycol monomethyl ether acetate | 27.0 |
| Methyl ethyl ketone | 53.0 |
| Cyclohexanone | 9.2 |
| Megafac F-176PF (DIC Corporation) | 0.05 |

(Formation of Internal Polarizing layer)

A color filter layer colored in blue, green and red was formed on a substrate having a black matrix layer previously formed thereon, and coating liquid AL-1 for forming the intermediate layer/alignment film was coated using a wire bar. The costing liquids was dried, and the resultant alignment film was then rubbed. The dry thickness of the film was found to be 1.6 μm. Coating liquid POL-1 for forming polarizing film was then coated using a slit coater, and then dried at 50˚C for 60 seconds, to thereby form a coated film having a dry thickness of 0.36 μm. The coated film was then irradiated with ultraviolet radiation at an irradiation energy of 5 J in a nitrogen atmosphere (oxygen concentration is 100 ppm or lower) so as to proceed photo-polymerization, and further annealed at 180˚C for one hour, to thereby form a polarizing film having a fixed state of alignment.

Thereafter, the ITO layer and the vertical alignment film were formed in a similar manner as described in the manufacturing process of the liquid crystal display device C1 in Comparative Example, to thereby obtain an opposing substrate.

(4) Production of VA-Mode Liquid Crystal Display Device 2 of Example

A VA-mode liquid crystal display device (liquid crystal display device 2) of Example of the present invention was manufactured similarly to the liquid crystal display device C2, except that an internal polarizing layer was formed by coating, using a slit coater in a similar manner as the method of manufacturing the liquid crystal display device 1, so as to be provided between the color filter layer and the pixel electrode layer of the COA substrate used for manufacturing the liquid crystal display device C2 of Comparative Example.

(5) Production of VA-Mode Liquid Crystal Display Device 3 of Example

A VA-mode liquid crystal display device (liquid crystal display device 3) of Example of the present invention was manufactured similarly to the liquid crystal display device C1, except that an internal polarizing layer was formed by the procedure described below, so as to be provided by transfer between the color filter layer and the ITO layer of the opposing substrate used for manufacturing the liquid crystal display device C1 of Comparative Example.

(Preparation of Coating Liquid CU-1 for Forming Thermoplastic Resin Layer)

The composition below was prepared, and filtered through a 30-μm-pore polypropylene filter. The filtrate was used as coating liquid CU-1 for forming the thermoplastic resin layer.

| Composition of Coating Liquid for Forming Thermoplastic Resin Layer (% by mass) | |
|---|---|
| Methyl methacrylate/2-ethyl hexyl acrylate/benzyl methacrylate/methacrylic acid copolymer (copolymerization compositional ratio (molar ratio)=55/30/10/5, weight average molecular weight=100,000, Tg≈70˚C) | 5.89 |
| Styrene/acrylic acid copolymer (copolymerization compositional ratio (molar ratio)=65/35, weight average molecular weight=10,000, Tg≈100˚C) | 13.74 |
| BPE-500 (from Shin-Nakamura Chemical Co., Ltd.) | 9.20 |

(continued)

| Composition of Coating Liquid for Forming Thermoplastic Resin Layer (% by mass) | |
|---|---|
| Megafac F-780-F (from DIC Corporation) | 0.55 |
| Methanol | 11.22 |
| Propylene glycol monomethyl ether acetate | 6.43 |
| Methyl ethyl ketone | 52.97 |

(Production of Transfer Material R-1 for Forming Polarizer)

Coating liquid CU-1 for forming the thermoplastic resin layer, and coating liquid AL-1 for forming the intermediate layer/alignment film which was used for manufacturing the internal polarizing layer using a slit coater, were coated in this order using a wire bar on a temporary support composed of a rolled polyethylene terephthalate film of 75 μm thick, the coated films were dried, and the resultant alignment film was rubbed. The dry thicknesses of the coated films were found to be 14.6 μm and 1.6 μm, respectively. Next, coating liquid POL-1 for forming the polarizer, which was used for manufacturing the internal polarizing layer using the slit coater, was coated thereon using a wire bar, and the coated films were then dried at 50˚C for 60 seconds, to thereby form a coated film having a dry thickness of 0.36 μm. The coated film was then irradiated with ultraviolet radiation at an irradiation energy of 5 J in a nitrogen atmosphere (oxygen concentration is 100 ppm or lower) so as to proceed photo-polymerization, and further annealed at 180˚C for one hour, to thereby form a polarizing film having a fixed state of alignment. Lastly, the coating liquid PP-1 for forming the photo-sensitive resin layer, which was used for manufacturing the internal polarizing layer using the slit coater, was coated on the surface of the polarizing film. The coated film was then dried to thereby form a photo-sensitive resin layer of 1.0 μm thick. A transfer material R-1 was thus manufactured.

(Formation of Internal Polarizing layer)

Using the thus-obtained transfer material R-1, the internal polarizing layer was formed between the color filter layer and the ITO layer of the opposing substrate. More specifically, the transfer material R-1 manufactured in the above was laminated onto the substrate preliminarily heated at 100˚C for 2 minutes, using a laminator Lamic II (from Hitachi Plant Technologies, Ltd.), at a rubber roller temperature of 130˚C, a line pressure of 100 N/cm, and a conveyor speed of 2.2 m/min. In this process, laminating was carried out while bringing the surface of the photo-sensitive resin layer into contact with the surface of the substrate. After the temporary support was separated, the product was subjected to light exposure over the entire surface using a super high pressure mercury lamp at an exposure energy of 50 MJ/$cm^2$, to thereby fix the photo-sensitive resin layer and the polarizing layer onto the substrate.

(6) Production of VA-Mode Liquid Crystal Display Device 4 of Example

A VA-mode liquid crystal display device (liquid crystal display device 4) of Example of the present invention was manufactured similarly to the liquid crystal display device C2, except that an internal polarizing layer was provided between the color filter layer and the pixel electrode layer of the COA substrate used for manufacturing the liquid crystal display device C2 of Comparative Example, by using the above-described transfer material R-1, so as to transfer the internal polarizing layer formed by the wire bar coating.

The contrast (white luminance/black luminance) values of the thus-manufactured VA-mode liquid crystal display devices 1 to 4, and the VA-mode liquid crystal display devices C1 and C2 of Comparative Examples were measured. Results are shown in Table below. The Table also shows DI'/P' values of the internal polarizing layer of the individual liquid crystal display devices, and $DI_{1CF}/P_{1CF}$ values of combinations of the color filter layer and the external polarizing layer.

Table 4

| Liquid crystal display device | Internal polarizing layer | | Color filter layer + external polarizing layer | COA structure *1 | Contrast ratio |
|---|---|---|---|---|---|
| | Method of formation | DI'/P' | $DI_{1CF}/P_{1CF}$ | | |
| 1 | Slit coating | $4.03\times10^{-4}$ | $4.89\times10^{-4}$ | × | 4990 |
| 2 | Slit coating | $4.03\times10^{-4}$ | $5.44\times10^{-4}$ | ○ | 4860 |

(continued)

| Liquid crystal display device | Internal polarizing layer | | Color filter layer + external polarizing layer | COA structure *1 | Contrast ratio |
|---|---|---|---|---|---|
| | Method of formation | DI'/P' | $DI_{1CF}/P_{1CF}$ | | |
| 3 | Wire bar coating + transfer | $4.17\times10^{-4}$ | $4.89\times10^{-4}$ | × | 4900 |
| 4 | Wire bar coating + transfer | $4.17\times10^{-4}$ | $5.44\times10^{-4}$ | ○ | 4800 |
| C1 | - | - | $4.89\times10^{-4}$ | × | 4610 |
| C2 | - | - | $5.44\times10^{-4}$ | ○ | 4330 |
| *1 "○" indicates that the COA structure is adopted, and "×" indicates that the COA structure is not adopted. | | | | | |

**Claims**

1. A polarizing film, satisfying $DI'/P'\leq4.3\times10^{-4}$ which expresses relation between degree of polarization P', and depolarization index DI' calculated by the equation below:

$$DI'=\frac{1+2PP'+P^2+X\left(P^2-1\right)}{P^2\left(1+X\right)}$$

where, X represents a value calculated by the equation below, provided that a polarizing plate having degree of polarization of P, the polarizing film, and a polarizing plate having degree of polarization P, having azimuths of transmission axes of a°, b° and c°, respectively, are stacked in this order as viewed from a light source, to give brightness written as [a/b/c]:

$$X=\frac{[0/0/0]}{[0/90/90]}$$

2. The polarizing film of claim 1, having a transmittance value of 30% or larger.

3. The polarizing film of claim 1 or 2, wherein the degree of polarization P' and the depolarization index DI' satisfy $DI'/P'\leq2.5\times10^{-4}$.

4. The polarizing film of any one of claims 1 to 3, wherein the degree of polarization P' is 0.4 to 1.0.

5. The polarizing film of any one of claims 1 to 4, formed of a composition comprising one or more species of liquid-crystalline azo dye.

6. The polarizing film of claim 5, wherein the composition comprises at leas one colorant compound in the amount of equal to or more than 30 % with respect to the total amount of a liquid-crystalline material contained in the composition.

7. The polarizing film of claim 5 or 6, wherein the one or more species of liquid-crystalline azo dye is a nematic liquid-crystalline azo dye represented by formula (I):

(I)

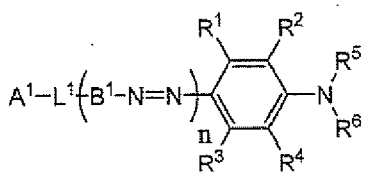

where $R^1$ to $R^4$ respectively represent a hydrogen atom or a substituent; $R^5$ and $R^6$ respectively represent a hydrogen atom or an optionally-substituted alkyl; $L^1$ represents -N=N-, -N=CH-, -C(=O)O- or -OC(=O)-; $A^1$ represents an optionally-substituted phenyl, an optionally-substituted naphthyl, an optionally-substituted aromatic heterocyclic group; $B^1$ represents an optional-substituted divalent aromatic hydrocarbon group or an optionally-substituted divalent aromatic heterocyclic group; n is an integer from 1 to 4, and $B^1$ may be same or different when n is equal to or more than 2.

**8.** The polarizing film of any one of claims 5 to 7, formed by coating the composition.

**9.** A laminate comprising a color filter layer, and a polarizing film of any one of claims 1 to 8 thereon.

**10.** A liquid crystal display device comprising a polarizing film of any one of claims 1 to 8.

**11.** The liquid crystal display device of claim 10, wherein the polarizing film is disposed in a liquid crystal cell.

**12.** The liquid crystal display device of claim 11, wherein the polarizing film is disposed between a color filter layer and a liquid crystal layer.

**13.** The liquid crystals display device of claim 10 or 11, comprising
first and second external polarizing plates,
a liquid crystal cell disposed therebetween, and
the polarizing film and a color filter layer being disposed in the liquid crystal cell,
wherein the liquid crystal display device satisfies the relational expression below:

$$DI'/P' < DI_{1CF}/P_{1CF}$$

where, P' and DI' represent degree of polarization and depolarization index, respectively, of the polarizing film; and $P_{1CF}$ and $DI_{1CF}$ represent degree of polarization and depolarization index, respectively, of a combination of the color filter layer and the first external polarizing plate disposed more closer to the color filter layer, which are calculated respectively from the equations below:

$$DI_{1CF} = 1 - P_{1CF}^{\ 2}$$

$$P_{1CF} = P(1 - DI_{CF})$$

P: degree of polarization of the first external polarizing plate; and
$DI_{CF}$: depolarization index of the color filter layer.

FIG.1

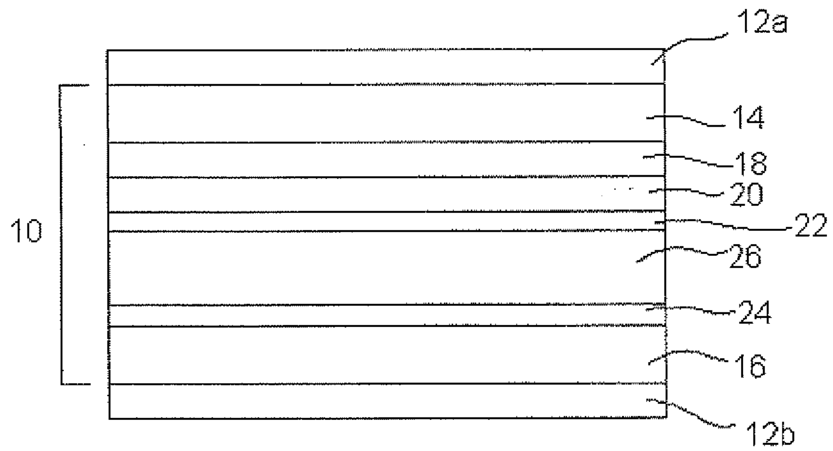


FIG. 2

| | | | | |
|---|---|---|---|---|
| R | BM | G | BM | B |

FIG.3

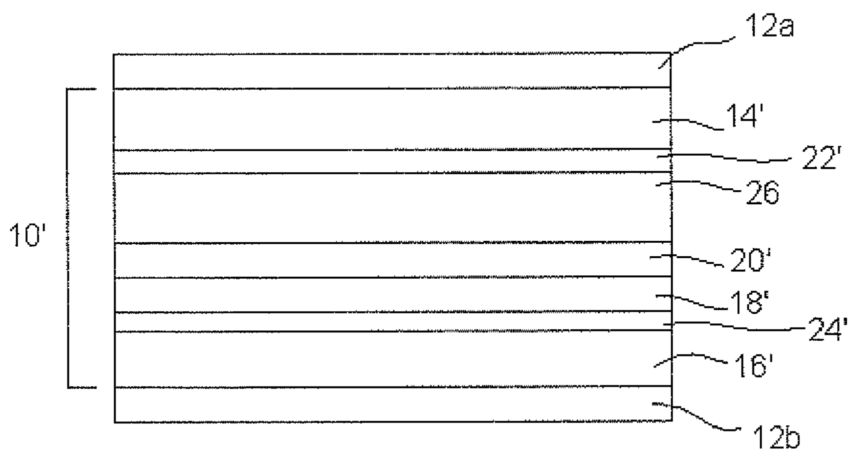

FIG. 4

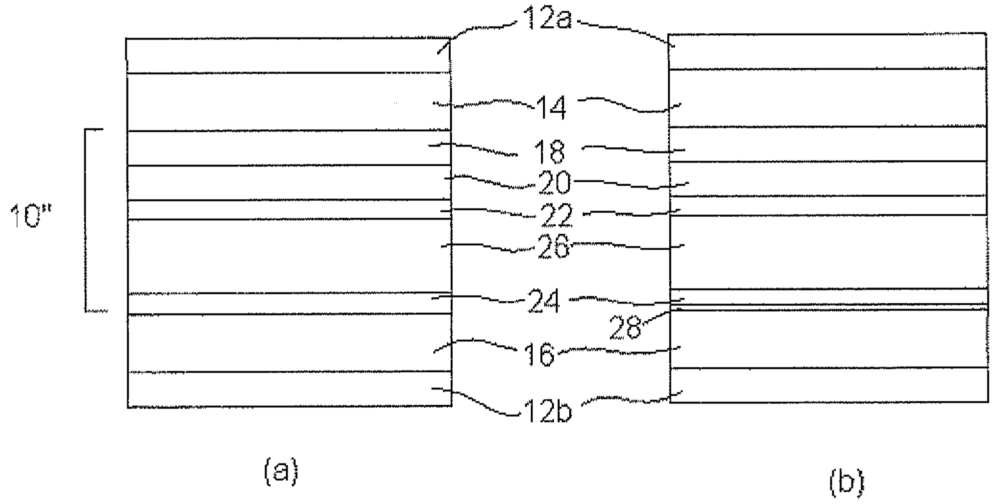

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008090317 A
- WO 0188574 A1
- JP 2006285197 A
- JP 2007076839 A
- JP 2007138138 A
- JP 2007094071 A
- JP 2007121721 A
- JP 2007140465 A
- JP 2007156439 A
- JP 2007133184 A
- JP 2009109831 A
- JP 3883848 B
- JP 4151746 B
- JP 2002229039 A
- JP 2002265541 A
- JP 2002317013 A
- JP 4205195 B
- JP 4205198 B
- JP 2003520878 PCT
- JP 2004529220 PCT
- JP 4162850 B
- JP 2000352611 A
- JP H011101964 B
- JP 2006161051 A
- JP 2007199237 A
- JP 2002527786 PCT
- JP 2006525382 PCT
- JP 2007536415 PCT
- JP 2008547062 PCT
- JP 3335173 B
- JP S5595981 B
- JP 2002510062 PCT
- JP 2002365427 A
- JP 2006184624 A
- JP H011248937 B
- JP H10508123 PCT
- JP 2005522726 PCT
- JP 2005522727 PCT
- JP 2006522365 PCT
- JP H07261024 B
- JP H08286029 B
- JP 2002180052 A
- JP 2002090526 A
- JP 2002357720 A
- JP 2005154746 A
- JP 2006047966 A
- JP 2006048078 A
- JP 2006098927 A
- JP 2006193722 A
- JP 2006206878 A
- JP 2006215396 A
- JP 2006225671 A
- JP 2006328157 A
- JP 2007126628 A
- JP 2007145995 A
- JP 2007186428 A
- JP 2007199333 A
- JP 2007291246 A
- JP 2007302807 A
- JP 2008009417 A
- JP 2002515075 PCT
- JP 2006518871 PCT
- JP 2006508034 PCT
- JP 2006531636 PCT
- JP 2006526013 PCT
- JP 2007512236 PCT
- JP H08278409 B
- JP H011305036 B
- JP 2002022942 A
- WO 0026705 A
- JP 2009139616 A

### Non-patent literature cited in the description

- **Y. Utsumi.** *SID 08 Digest,* 2008, 129
- **Y. Utsumi et al.** *Euro Display,* 2005, vol. 2005, 301
- *Journal of Materials Chemistry,* 1999, vol. 9 (11), 2755-2763
- **Ekisho Binran.** The Handbook of Liquid Crystal. Maruzen Co., Ltd, 30 October 2000
- Ekisho Binran. Maruzen Co., Ltd,
- Ekisho Hyoji Sochi Kosei Zairyo no Saishin Gijutsu. CMC Publishing Co., Ltd,
- Tomei Dodenmaku. CMC Publishing Co., Ltd,
- Tomei Dodenmaku no Gijutsu
- Ekisho Hyoji Sochi-yo Bakku Raito Gijutsu. CMC Publishing Co., Ltd,
- **T. Ohyama et al.** *SID'04 Digest of Technical Papers,* 2004, 1106-1109